Europäisches Patentamt

European Patent Office

Office européen des brevets

(19)

(11)  **EP 1 371 967 B1**

(12)  **EUROPEAN PATENT SPECIFICATION**

(45) Date of publication and mention
of the grant of the patent:
**12.10.2005  Bulletin 2005/41**

(51) Int Cl.$^7$: **G01N 21/55**, G01N 21/03

(21) Application number: **03013309.4**

(22) Date of filing: **12.06.2003**

(54) **A cuvette for a reader device for assaying substances using the evanescence field method**

Küvette für ein Lesegerät zur Bestimmung von Substanzen mittels der Evaneszenzfeldmethode

Cuvette pour un dispositif de lecteur pour mettre en évidence des substances selon la technique du champ évanescent

(84) Designated Contracting States:
**AT BE BG CH CY CZ DE DK EE ES FI FR GB GR
HU IE IT LI LU MC NL PT RO SE SI SK TR**

(30) Priority: **14.06.2002  EP 02013189**

(43) Date of publication of application:
**17.12.2003  Bulletin 2003/51**

(73) Proprietors:
• **STIFTUNG FÜR DIAGNOSTISCHE FORSCHUNG
CH-1785 Cressier sur Morat (CH)**
• **Leuze electronic GmbH + Co KG
73277 Owen/Teck (DE)**

(72) Inventors:
• **Schawaller, Manfred
1785 Cressier (CH)**
• **Quapil, Gerald
73277 Owen/Teck (DE)**

(74) Representative: **Müller-Boré & Partner
Patentanwälte
Grafinger Strasse 2
81671 München (DE)**

(56) References cited:
**EP-A- 1 079 226          WO-A-01/14859
WO-A-95/22754          DE-A- 19 817 470**

**Description**

The present invention relates to a cuvette for a reader device for assaying substances using the evanescence field method, to a method for preparing a cuvette processed for assaying substances and to a method for assaying substances using said cuvette.

Medical diagnostics, especially immunological diagnostics, is largely based on the ELISA (Enzyme-Linked-Immunoabsorbent Assay). A recent review of immune assays can be found in Hage, Anal. Chem. 71 (1999), 294R-304R. An ELISA test is used to determine the concentration of antigens or antibodies. The substance being studied (for example, an antigen) is first placed in contact with a solid substrate to which a specific reaction partner for the substance being studied is first coupled (for example, an antibody). By bonding the substance being studied as the second reaction partner to the first reaction partner coupled to the substrate, the substance being studied is concentrated on the solid substrate. Then, a third reaction partner (for example, another antibody) for the substance being studied is placed in contact with the substrate, and this third reaction partner is marked with an enzyme, which allows colorimetric detection. When this third reaction partner reacts with (i.e. binds to) the substance being studied coupled to the surface of the substrate, a colored product is produced via an enzymatic reaction that can be evaluated optically. Standardized plastic plates, frequently made of polystyrene, with 96 wells are mostly used as the solid substrate. The surface of the plastic wells binds proteins in the nanogram range through absorption in a quantity sufficient for immunological detection. There are several ways of marking the third reaction partner, which is mostly an immunoglobulin, with an enzyme. Markers currently used are, for example, peroxidase or alkaline phosphatase.

ELISAs give good results in terms of sensitivity and specificity, and the detection limits that can be reached are in the nanogram range or below it. There is a wide variety of embodiments of assays that are based on this principle. With it, antigens or antibodies can be detected, depending on what the question is.

However, a major disadvantage of the ELISA is handling the test, since different reagents are added to the wells one after another and must be removed again. Ten or more pipetting, washing and incubation steps in all may be necessary. Thus, ELISAs are very time-consuming and labor-intensive, and must be done by specially trained personnel with great care. Another disadvantage of the ELISA is the time it takes for all the incubation and washing steps for an assay or test, which normally lasts one hour or more.

With the evanescence field method, the interaction of biomolecules, for example, on a surface can be observed directly. Here, the interaction of reactants in solution is measured with a solid matrix surface. It is possible to measure the bonding of the ligands physically as "surface plasmon resonance" in "real time". The advantages compared to an ELISA are the elimination of other pipetting steps after the addition of the reagents and the elimination of the waiting steps. In the past, expensive apparatuses and multi-layer sensor chips with special surface chemistry were needed for such measurements. These disadvantages prevent the method from being used in routine diagnostics.

Evanescent field methods for assaying biochemical interaction processes on reaction surfaces regularly employ cuvettes having wells for receiving the solution containing the substances to be analyzed. For numerous diagnostical and analytical applications, one-way or expendable cuvette would be preferable so that a significant demand for low-cost cuvettes exists. At the same time, however, biochemical analysis tools must suffice ever increasing requirements concerning sensitivity and reproducibility. Therefore, cuvettes must both fulfill strict prerequisites regarding production costs and biochemical/optical properties.

WO 01/14859 describes a cuvette for a reader device for assays, which device comprises features corresponding to the apparatus of the invention. However, according to the arrangement of this prior art device the light beam enters the base portion of the cuvette at one side and leaves the base at the opposite side.

Thus, the technical problem underlying the present invention is to provide an inexpensive cuvette for a reader device for assaying substances using the evanescence field method having both excellent biochemical and optical properties allowing highly sensitive, reproducible and fast assays. Further, a method for preparing a cuvette should be provided, said cuvette being processed so that it is ready to use in routine diagnostics.

The solution to the above technical problem is achieved by providing the embodiments characterized in the claims.

In particular there is provided a cuvette for a reader device for assays using the evanescence field method comprises:

- at least one well portion having at least one well for receiving a solution containing substances to be assayed; and
- at least one base portion supporting side wall members of the well portion and providing an excitation surface of the well;

wherein the base portion is made of an optically transparent material and has a cross-sectional shape of an isosceles trapezoid in a plane perpendicularly intersecting the excitation surface of the well, the trapezoid having first and second sides of equal length and parallel base and top sides;

wherein the base portion further comprises

- a base surface being spaced apart from and parallel to the excitation surface, the cross section of the base surface in said plane being the base side of the trapezoid;
- a first surface for receiving an excitation light beam of an external excitation light source, the cross section of the first surface in said plane being the first side of the trapezoid; and
- a second surface opposite to the first surface, the cross section of the second surface in said plane being the second side of the trapezoid;

and wherein the base portion is adapted to guide the excitation light beam at least partially along an optical round path from a point of incidence on the first surface via reflections on the excitation surface, the second surface and the base surface back to the point of incidence.

Preferably, the angle of incidence $\alpha$ of the excitation light beam incident on the first surface is chosen so that it meets the Brewster criteria $\tan \alpha = n_2 / n_1$, wherein $n_2$ is the refractive index of the base portion and $n_1$ is the refractive index of the environment, for example air ($n_1 = 1$). If the excitation light beam is linearly polarized in its plane of incidence, no reflection of the excitation light beam on the first surface of the base portion will occur. Instead, the excitation light beam will be refracted with an angle of refraction $\beta$ into the base portion.

Subsequently, the excitation light beam is preferably totally reflected by the excitation surface of the well, i. e. the interface between the base portion and the solution containing the substances to be assayed. The excitation light beam reflected by the excitation surface produces an electromagnetic evanescence field which penetrates into the well. The evanescence field exponentially decays in a normal direction of the excitation surface into the well. In a region adjacent to the excitation surface, the substances to be assayed will be optically excited by the evanescence field so that a fluorescence signal may be observable. As the evanescence field rapidly decays into the well, the excitation region is confined to a space of not more than typically 100 nm from the excitation surface into the well. Therefore, no optical excitation of substances in the volume of the solution will occur.

Subsequently, the reflected light beam will impinge on the second surface of the base portion. If the plane of polarization of the light beam remains unchanged, (i.e. remains identical to the plane of polarization of the excitation light beam incident on the first surface), the entire light beam will be refracted on the second surface and will leave the base portion. However, many materials which may be used to manufacture the base portion are birefringent so that the plane of polarization of the reflected light beam incident on the second surface will not correspond to the initial plane of polarization. In this case, the light beam incident on the second surface will be partially reflected on the second surface. This reflected light beam will subsequently propagate in a direction towards the base surface of the base portion and will preferably be totally reflected on the base surface.

According to the present invention, the trapezoidal shape of the base portion and the refractive index $n_2$ of the base portion are selected so that the light beam reflected by the base surface impinges on the first surface on substantially the same point or area of incidence as the initial incoming excitation light beam. In other words, the light beam is reflected and guided in the base portion in such a way to make a closed optical round path. The light beam will be reflected by the excitation surface, the second surface and the base surface back to the first surface in this order. The light beam reflected by the base portion will partly be reflected again by the first surface and will propagate along the same optical round path as the excitation light beam refracted at the first surface. The light beam reflected by the base surface will also be partly refracted by the first surface so as to leave the base portion.

This special optical design of the base portion offers significant advantages when compared to conventional cuvette designs. In particular, the path length of the propagation path of the excitation light beam in the base portion is relatively short when compared to path lengths of excitation light beams in conventional cuvettes. Since the base portion of any cuvette, especially a low cost expendable cuvette, will be made of a material, for example plastic, having optical impurities or faults, a short path length of the excitation light beam in the base portion is preferable. A long path length will result in a larger parasitic light intensity of light scattered by optical impurities. This parasitic light may enter the well and excite substances in the volume of the solution. This yields a parasitic background signal reducing the signal to noise ratio of the fluorescence signal to be detected. Another advantage of a cuvette according to the present invention resides in the fact that, when compared to conventional cuvettes, the cuvette allows for a relatively large detecting angle, i.e. the fluorescence signal may be detected over a larger angular range.

According to a preferred embodiment, the height H of the trapezoid is given by

$$H = -\frac{A\sin(\beta-\gamma)}{2(-\cos(\beta-\gamma)+\sin(\beta-\gamma)\tan(\gamma))}$$
$$-\left(-\frac{A}{2}+\frac{A\sin(\beta-\gamma)\tan(\gamma)}{2(-\cos(\beta-\gamma)+\sin(\beta-\gamma)\tan(\gamma))}\right)\tan(\beta+\gamma),$$

wherein $(90°-\gamma)$ is the trapezoid base angle between the base side and the first side, $n_2$ is the refractive index of the base portion, A is the length of the top side of the trapezoid and

$$\beta \approx \arcsin\left(\frac{\sin(\arctan(n_2))}{n_2}\right).$$

The height H of the trapezoid is the distance between the top and base sides of the trapezoid in a direction perpendicular to the base side. The above relation holds for a cuvette which is to be operated in a gaseous environment having a refractive index $n_1 = 1$. Furthermore, it was assumed that the excitation light beam incident on the first surface of the base portion is oriented so as to impinge on the first surface with an angle of incidence corresponding to the Brewster angle $\alpha_B = \arctan(n_2)$. $\gamma$ is a trapezoid inclination angle defining the angle between a normal direction of the base side and the first and second sides of the trapezoid. $\beta$ is the angle of refraction of the excitation light beam refracted on the first surface of the base portion.

If the angle of incidence $\alpha$ of the excitation light beam on the first surface corresponds to the Brewster angle $\alpha_B$, the angle $\beta$ is only dependent on the refractive index $n_2$ of the material of the base portion. For a given length A of the top side and the trapezoid inclination angle $\gamma$ of the trapezoid, the height H of the trapezoid can be calculated using the above formula. It should be noted, however, that the angle of incidence $\alpha$ of the excitation light beam does not need to correspond exactly to the Brewster angle $\alpha_B$. Instead, angular deviations of $\alpha$ relative to the Brewster angle $\alpha_B$ are possible but will result in a decreased efficiency. The angle of incidence $\alpha$ is preferably chosen to be the Brewster angle $\alpha_B$ since in this case no reflection losses will occur on the first surface if the incident excitation light beam is linearly polarized in its plane of incidence. If, for example, the angle of incidence $\alpha$ of the excitation light beam deviates from the Brewster angle $\alpha_B$ by $10°$, the losses due to reflections on the first surface of the trapezoid will be in the order of 1% of the initial intensity $I_0$ of the incident excitation light beam. This corresponds to approximately the same order of magnitude as the portion of light emitted by a conventional semiconductor laser diode which is not linearly polarized. Therefore, it is possible to relax the above stringent condition on the angle of incidence $\alpha$ without sacrificing substantial efficiency.

According to a preferred embodiment of the present invention, the base side reflection angle $\delta = 90° - \beta + \gamma$ is greater than $\arcsin(1/n_2)$, $n_2$ being the refractive index of the base portion and

$$\beta \approx \arcsin\left(\frac{\sin(\arctan(n_2))}{n_2}\right).$$

Along the optical round path of the excitation light beam in the base portion of the cuvette, the light beam is preferably totally (internally) reflected on the base surface of the base portion. For this end, the base side reflection angle $\delta$ (angle between a normal direction of the base side and the light beam incident on the base side) has to be larger than $\arcsin(1/n_2)$. The base side reflection angle $\delta$ is a function of the angle of refraction $\beta$ of the light beam reflected on the first surface.

According to a preferred embodiment of the present invention, the excitation side reflection angle $\varepsilon = 90° - (\beta - \gamma)$ is larger than $\arcsin(1/n_2)$, $n_2$ being the refractive index of the base portion and

$$\beta \approx \arcsin\left(\frac{\sin(\arctan(n_2))}{n_2}\right).$$

Similarly to the embodiment described above, it is also strongly preferred that the excitation light beam is totally (internally) reflected by the excitation surface of the base portion. In this case, only the electromagnetic evanescence field will optically excite the substances to be analysed in a space very close to the excitation surface. An optical excitation of substances in the volume of the well will not occur. Thus, the excitation side reflection angle $\varepsilon$ is preferable larger than arcsin (1 / $n_2$). The excitation side reflection angle is the angle between the excitation light beam impinging on the excitation surface and a normal direction of the excitation surface.

According to another preferred embodiment of the present invention, the trapezoid is substantially a rectangle having a height H and a width A and A / H $\approx n_2$. It should be understood that the rectangular shape of the base portion in a cross-sectional plane parallel to the normal direction of the excitation surface should also encompass small angular deviations (a few degrees) from a perfect rectangular shape. The relation of the width A the height H of the rectangle is in this case preferably chosen to correspond to the refractive index $n_2$ of the base portion. This relation holds as long as the angle of incidence $\alpha$ of the incident excitation light beam is chosen to correspond to the Brewster angle arctan ($n_2$).

The cuvette of the present invention is made of optically transparent material, preferably in the wavelenght range of from 600 to 700 nm, such as glass, quartz, silicones or transparent polymers or any combinations of these materials. The cuvette especially preferably contains a plastic, such as polystyrene, a polyolefin such as polypropylene, polyethylene, polyethylene terephthalate, a polycycloolefin, polyacrylnitrile, polymethylmethacrylate, polycarbonate, SAN, cyclocopolymerolefine (COC; distributed of example under the brand names TOPAS or ZEONEX) and/or mixtures or blends of these plastics. In principle, any plastic or resin is suitable that basically absorbs no light in the spectral range of interest (for example the visible range) and preferably allows the application of a suitable coating for in particular binding fluorescent molecules. The material may contain additives to improve the processing characteristics, in particular for injection molding. Since the dispersion relations of the above materials are known, any necessary adjustments of the size dimensions of the well and base portions may be performed by calculations. In one form of embodiment, the plastic can also be dyed, for example light blue, in order to filter out an emission caused by scattered light. At the wavelenghts of interest, the base portion is perferably optically transparent whereas the well portion may be made of a light absorbing or opaque material. Plastic cuvettes can be obtained inexpensively by injection molding and preferably have a reaction volume of 1 to 400 µl, and especially preferred 5 to 200 µl. Preferably, the cuvette of the present invention is made in one piece. It can also be an advantage if the inside and/or emission surface, i.e., the surface from which the emitted beam comes out of the cuvette, is/are polished to a surface roughness of preferably 10 nm maximum.

Preferably, the well portion and the base portion are unitarily formed. For example, the well and base portions may be formed by injection moulding. Alternatively, it is also possible to separately form the well portion and the base portion and to assemble these portions using for example an adhesive having a refractive index matching the refractive index of the base portion. Preferably, the well and base portions are formed of a material comprising polymers such as listed above.

According to another preferred embodiment of the present invention, the cuvette comprises a plurality of well portions. For example, the well portions may be linearly arranged in a bar-shaped cuvette so that a plurality of assays may be performed with a single cuvette. Preferably, only a single base portion is provided for the plurality of well portions.

The the present invention will now be described by way of example in connection with the accompanying drawings. In the figures:

Fig. 1(a)    A top view of a preferred embodiment of a cuvette according to the invention;
Fig. 1(b)    a cross-sectional view of the cuvette along the line A-A in Fig. 1 (a);
Fig. 1(c)    a side view of the lower end side of the cuvette shown in Fig. 1 (a);
Fig. 1(d)    a cross-sectional view along the line B-B of Fig. 1(a),
Fig. 1(e)    a cross-sectional view of the cuvette along the line C-C of Fig. 1 (a);
Fig. 1(f)    perspective views of the cuvette shown in Fig. 1 (a);
Fig. 2    a schematic drawing of a base portion of a cuvette according to another preferred embodiment of the present invention, wherein the optical path of the light beam is schematically depicted;
Fig. 3    a schematic view of one embodiment of the method for assaying substances using the cuvette of the present invention;
Fig. 4    a kinetic of biotin-HRP binding to streptavidin surface;
Fig. 5    a mouse IgG titration in ELISA (A) and fluorescence assay (B); and

Fig. 6        a titration of mouse IgG in different matrices.

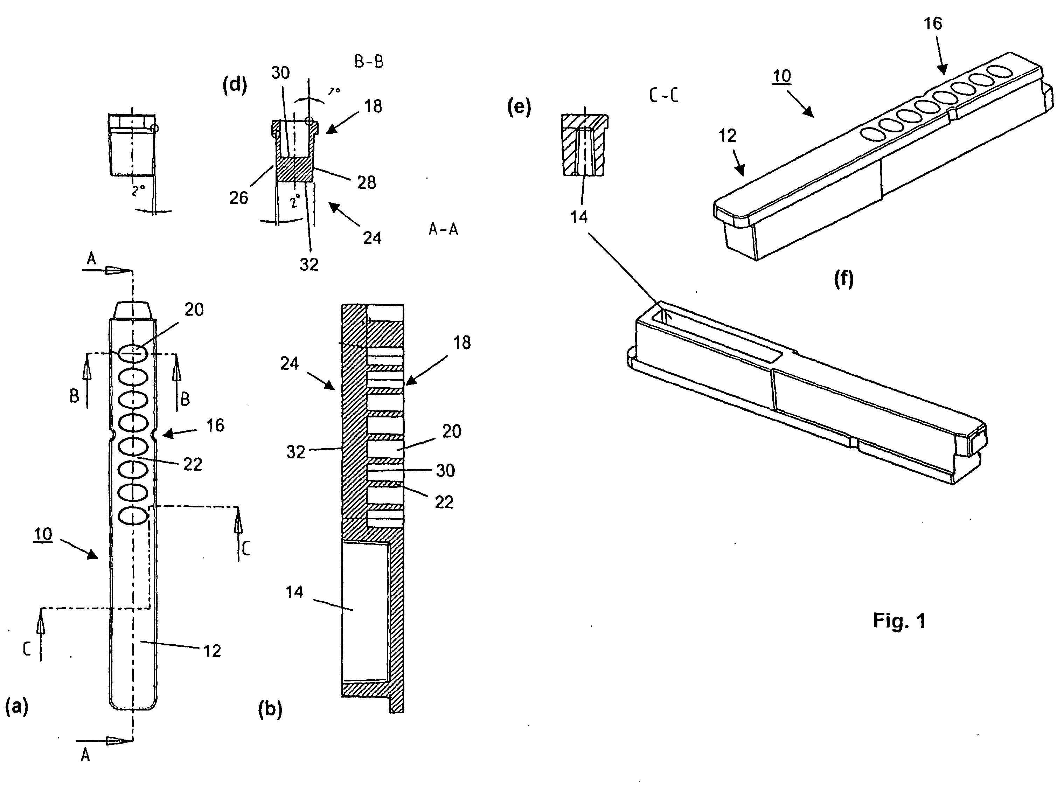

In Fig. 1(a), a preferred embodiment of the cuvette according to the present invention is shown. The cuvette 10 is substantially bar-shaped and has a handling portion 12 for handling and mounting the cuvette 10 into a reader. As shown in Fig. 1(b), the handling portion 12 has a recess 14 formed therein. Opposite to the handling portion 12 of the cuvette 10, an analyzing portion 16 is formed. The analyzing portion 16 has a plurality of well portions 18 having wells 20 for receiving a solution containing substances to be analysed. The side walls 22 of the wells 20 are supported by a base portion 24 which extends over the whole analyzing portion 16. In the preferred embodiment shown in Fig. 1, the base portion 24 is integrally formed with the well portion 18. Preferably, the cuvette is injection moulded and consists of, for example, Polysytrene 158 K.

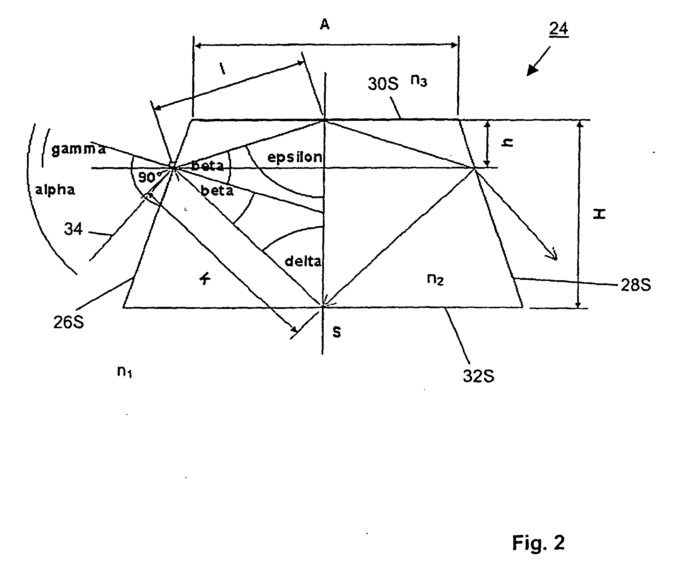

In Fig. 1(d), a cross-sectional view of the cuvette along line B-B of Fig. 1(a) is depicted. The cross-section is taken in a plane intersecting an excitation surface 30 of a well 20 of the well portion 18 at right angles, i.e. the cross-sectional plane is parallel to the normal direction of the excitation surface 30. The base portion 24 of the cuvette 10 has a first surface 26 for receiving an excitation light beam of an external excitation light source (not depicted). A second surface is arranged opposite to the first surface 26. The bottom of the base portion 24 is formed by a base surface 32 which is spaced apart from and parallel to the excitation surface 30. In the cross-section shown in Fig. 1 (d), the base portion 24 of the cuvette 10 has the shape of an isosceles trapezoid. Referring also to Fig. 1(d) and Fig. 2, the top side 30S of the trapezoid is formed by the excitation surface 30 extended across the side wall members 22 of the well portion 18. The base side 32S of trapezoid is formed by the base surface 32. The first side 26S and the second side 28S of equal length of the trapezoid are formed by the first surface 26 and the second surface 28, respectively. References numerals 26, 28, 30 and 32 will be used when referring to the surfaces and reference numerals 26S, 28S, 30S and 32S will be used for the sides or legs of the trapezoid.

The first and second sides 26S, 28S of the trapezoid are inclined by an angle $\gamma$ of 2° with respect to a normal direction of the top side 30S or the base side 32S. This small inclination of the first and second surfaces 26 and 28 of the base portion 24 aids in removing the cuvette from the injection mould after moulding.

Fig. 2 shows a schematic cross-sectional view of a base portion 24 of a cuvette according to another preferred embodiment of the present invention. In Fig. 2, the optical path of an excitation light beam 34 of an external excitation light source, preferably a semiconductor laser diode, is depicted. The excitation light beam 34 is received by the first surface 26 of the base portion 24. Preferably, the angle of incidence $\alpha$ of the incident excitation light beam 34 corresponds to the Brewster angle $\alpha_B = \arctan(n_2 / n_1)$, wherein $n_2$ is the refractive index of the base portion 24 and $n_1$ is the refractive index of the surrounding environment, typically air. In this case, $n_1 = 1$.

Above the excitation surface 30 (top side 30S), a well 20 for receiving a solution containing substances to be assayed is formed. The well portion 18 is, for the sake of simplicity, not shown in Fig. 2. It should be understood, however, that the excitation surface 30 will operationally be the interface between the base portion 24 having the refractive index $n_2$ and the solution having a refractive index $n_3$ in the well 20.

The excitation light beam 34 is refracted on the first surface 26 (first side 26S in Fig. 2) of the trapezoid. The refracted light beam subsequently impinges on the excitation surface 30 (top side 30S in Fig. 2), where it is internally totally reflected so as to propagate in the direction of the second surface 28. If the incident excitation light beam 34 is perfectly linearly polarized in its plane of incidence, no reflections of the incoming excitation light beam 34 will occur on the first surface 26. Furthermore, under ideal optical conditions (material of the base portion 24 not by birefringent), the excitation light beam 34 will leave the base portion 24 by being refracted on the second surface 28. However, typical materials for the base portion 24 are birefringent so that the plane of polarization of the excitation light beam will be disturbed. Therefore, partial reflections of the light beam 34 on the second surface 28 occur. The reflected light beam propagates in the direction of the base surface 32 (base side 32S) where it is preferably totally reflected.

The base portion 24 is designed such that the light beam reflected by the base surface 32 impinges on the first surface 26 on substantially the same point or area where the incoming excitation light beam 34 initially hits the first surface 26. In other words, the coupling height h being the distance between the excitation surface 30 (top side 30S) and the point of incidence of the incoming excitation light beam 34 in a normal direction of the top side 30S is the same height under which the light beam reflected by the base surface 32 impinges the first surface 26. Thus, the base portion 24 of the cuvette 10 is designed such that an incident excitation light beam 34 is guided in the base portion 24 along an (closed) optical round path having identical starting and ending points/areas. It should be understood that the excitation light beam 24 shown in Fig. 2 is simplified to the extent that an actual excitation light beam will have a finite beam width. The beam width is preferably adjusted so as to excite a predetermined area of the excitation surface 30. Also for an excitation light beam 34 of parallel light having a finite beam width, the above optical round path criteria holds.

The optical round path in the base portion 24 of the cuvette 10 has numerous advantages when compared to conventional cuvettes. For example, the path length of the optical round path (2l + 2k for a round trip, see Fig. 2) is considerably shorter than the path length in conventional cuvettes. Reducing the path length of the optical path in the cuvette implies a reduction of the intensity of light scattered at impurities which are inevitably present in the base portion 24. Furthermore, the design of the base portion 24 allows for a larger viewing or detecting angle for collecting/detecting the fluorescence light. Whereas in conventional cuvette designs, the fluorescence can only be detected in a relatively small angular range, the detecting angle of a cuvette 10 according to the invention may be larger resulting in an improved fluorescence signal. Furthermore, the trapezoidal shape of the base portion 24 is relatively easy to manufacture using injection moulding techniques known in the art. In particular, the first and second surfaces 26 and 28 of the base portion 24 do not necessarily need to be optically polished since the accuracy of the injection moulding technique will regularly be sufficient for an optically flat surface.

In the following, referring to Fig. 2, a preferred design procedure of a preferred embodiment of the present invention will be described:

In order to obtain total internal reflections of the excitation light beam 34 by the excitation and base surfaces 30, 32 of the base portion 24, the excitation surface angle $\varepsilon$ and the base surface angle $\delta$ must be larger than the respective critical angles for total reflections. Hence,

$$\varepsilon(\beta,\gamma) > \varepsilon_{min}$$

$$\delta(\beta,\gamma) > \delta_{min},$$

wherein

$$\varepsilon(\beta, \gamma) = 90° - (\beta - \gamma);$$

$$\delta(\beta, \gamma) = 90° - (\beta + \gamma);$$

and

$$\delta(\beta,\gamma) = 90° - (\beta + \gamma).$$

The critical angles for a total reflections are

$$\delta_{min} = arcsin (n_1 / n_2);$$

and

$$\varepsilon_{min} = arcsin (n_3 / n_2).$$

As stated previously, a closed optical path (an optical round path) of the excitation light beam 34 in the base portion 24 is strongly preferred, if birefringent materials (for example plastic materials) are used to manufacture the base portion 24. In order to have a closed optical path within the base portion 24, the following conditions must be met:

$$A /2 + h \tan(\gamma) = I \cos (\beta - \gamma),$$

$$h = I \sin (\beta - \gamma),$$

$$A /2 + h \tan(\gamma) = k \cos (\beta + \gamma),$$

wherein I is the optical path length between the point of incidence on the first surface 26 to the point of incidence on the excitation surface 30 and k is the optical path length between the points of incidence on the first and base surfaces 26 and 32 for a symmetrical optical round path in the base portion 24. A is the length of the top side 30 connecting the first and second sides 26S, 28S.

It can be shown that the above conditions yield the following expression for the height H of the trapezoid:

$$H = -\frac{A\sin(\beta-\gamma)}{2(-\cos(\beta-\gamma)+\sin(\beta-\gamma)\tan(\gamma))} - \left(-\frac{A}{2}+\frac{A\sin(\beta-\gamma)\tan(\gamma)}{2(-\cos(\beta-\gamma)+\sin(\beta-\gamma)\tan(\gamma))}\right)\tan(\beta+\gamma)$$

The coupling height h of an incident excitation light beam 34 having a symmetrical optical round path in the base portion 24, i.e. a round path wherein the reflections on the top and base sides 30S, 32S of the trapezoid are in the center of the respective sides is given by

$$h = -\frac{A\sin(\beta-\gamma)}{2(-\cos(\beta-\gamma)+\sin(\beta-\gamma)\tan(\gamma))}.$$

The coupling height h should preferably be in agreement with the beam width of the excitation light beam 34.

For the special case wherein the trapezoid is a rectangle and the incident excitation light beam 34 is incident under the Brewster angle $\alpha_B$ = arctan ($n_2 / n_1$), a simple relation for the relation A / H can be calculated. For a rectangle ($\gamma = 0$),

$$\tan(\beta)=\frac{H/2}{A/2}.$$

If $\alpha$ corresponds to the Brewster angle $\alpha_B$, the angle between the light beam reflected and refracted at the first surface 26 is 90°, so that

$$\tan(\beta) = \tan(90°-\alpha)=\frac{1}{\tan(\alpha)}.$$

Therefore,

$$\tan(\alpha)=\frac{n_2}{n_1} = \frac{A}{H}.$$

In a preferred embodiment of the present invention the excitation surface 30 of the cuvette is preferably hydrophilic. A substantially hydrophilic excitation surface 30 can be obtained, for example, by at least partially coating the surface with a hydrophilic compound. Hydrophilic compound systems which can be used for providing a hydrophilic excitation surface 30, are, for example, dextrane derivatives, such as allyl dextrane, which are covalently coupled to the excitation surface made up of e.g. a polystyrene upon X-ray treatment of the excitation surface to generate radicals. In particular, an example for preparing a hydrophilic excitation surface 30 using allyl dextran is as follows: a polystyrene chip as cuvette ($\gamma$ radiated with 26 kGray, $^{60}$Co) is provided and 50µl of a solution of allyldextran having a molecular weight of about 150kD (100µg/µl in water) is added and incubated for 16h at room temperature. The solution is aspirated and the polystyrene chip is washed three times with water. After incubation with 50µl of a solution of sodium(meta) periodate (30mM in water) for 1h at room temperature, the solution is aspirated and the polystyrene chip is washed three times with PBS. Then 50µl of a solution of neutravidin (40µg/µl in 0.1M NaHCO$_3$, pH 9.3) is added and incubated for 2h at room temperature, followed by an addition of 0.5µl of a solution of sodium-cyanoborohydride (5 M) and incubation for 15 min at room temperature, and subsequently by adding and incubating with 25µl of an aqueous solution of ethanolamine (300 mM) for 15 min at room temperature. The solutions are aspirated and the polystyrene chip is washed three times with PBS. The excess reactive sites of the polystyrene chip are blocked by incubating in a 100µl blocking solution (e.g. PBS, 1% BSA, 0.25% Tween 20) for 1h at room temperature.

Alternatively, a hydrophilic compound system which can be used for providing a hydrophilic excitation surface 30, is the poly-L-lysine/glutardialdehyde-system. In particular, an example therefore is as follows: a polystyrene chip as cuvette ($\gamma$ radiated with 26 kGray, $^{60}$Co) is provided and 50 $\mu$l of a solution of poly-L-lysine (10$\mu$g/$\mu$l in PBSplus (100mM $K_2HPO_4/KH_2PO_4$, 100mM NaCl pH 7.5), is added and incubated for 16h at room temperature The solution is aspirated and the polystyrene chip is washed three times with PBS. After incubation with 50$\mu$l of a solution of glutardialdehyde (1% in PBSplus) for 1h at room temperature, the solution is aspirated and the polystyrene chip is washed three times with PBS. Then 50$\mu$l of a solution of neutravidin (40$\mu$g/$\mu$l in 0.1M NaHCO$_3$, pH 9.3) is added and incubated for 2h at room temperature, followed by an addition of 0.5$\mu$l of a solution of sodium-cyanoborohydride (5 M) and incubatiing for 15 min at room temperature, and subsequently by adding and incubating of 25$\mu$l of an aqueous solution of ethanolamine (300 mM) for 15 min at room temperature. The solutions are aspirated and the polystyrene chip is washed three times with PBS. The excess reactive sites of the polystyrene chip are blocked by incubating in a 100$\mu$l blocking solution (e.g. PBS, 1% BSA, 0.25% Tween 20) for 1 h at room temperature.

The coating of the above mentioned hydrophilic compounds on the excitation surface can form, for example, so-called "island-structures" or monolayers.

According to a further preferred embodiment of the present invention a compound as reaction partner R1 is immobilized (i.e. bonded) on the excitation surface 30 of the cuvette, wherein the excitation surface may be coated with hydrophilic compounds as outlined above. The term "immobilized" preferably means that the reaction partner R1 is adhered to the excitation surface 30 by absorption ("direct absorption"). However, the reaction partner R1 can also be immobilized to the excitation surface 30 via an anchoring compound, for example a protein such as an antibody, an antigen, streptavidin, avidin, neutravidin, or compounds such as biotin. The reaction partner R1 can also be immobilized on the excitation surface (30) via covalent bond(s). This can be provided by, for example, conversion with a carbodiimide of an acrylate-containing excitation surface.

In general, the terms "immobilized" and "bonded" in the sense of the present invention mean adhesion of a reaction partner or a compound such as an anchoring compound or a fluorophor-containing compound, to a surface such as the excitation surface 30, or to another reaction partner and/or compound, and include both covalent and non-covalent interactions, such as interactions based on ionic, polar or non-polar interactions.

The reaction partner R1 or the anchoring compound can be placed on the excitation surface by a common method. For example, a protein serving as reaction partner R1 or an anchoring compound can be coated on the excitation surface. Reaction partner R1 or the anchoring compound can preferably be bonded to the surface by absorption or by covalent bond(s). After this step, the excitation surface is preferably treated with another solution containing blocking compounds, and areas on the excitation surface not containing reaction partner R1 or the anchoring compound are blocked or will be blocked, for example by another protein as a blocking compound that basically does not react with the components in the solutions used for performing the assay.

In preferred embodiments of the present invention, the reaction partner R1 or the anchoring compound are present in lyophilized form.

In yet another preferred embodiment of the present invention the lyophilized reaction partner R1 or the lyophilized anchoring compound is covered by a lyophilized spacer-layer. The constituents of the spacer-layer are preferably selected from the group consisting of one or more buffer compounds such as HEPES, one or more proteinaceous compounds such as BSA, one or more hydrophilic polymers such as dextran, one or more complexing agents/anticoagulants such as EDTA and optionally bacteriostatic compounds such as Trimethoprim and/or Sulfamethoxazole, and a mixture containing one or more of these constituents. Further, the spacer layer may also contain the reaction partner R3.

In further preferred embodiments of the present invention, the cuvette contains, besides the lyophilized reaction partner R1 or the anchoring compound and the spacer-layer, a lyophilisate which covers the lyophilized spacer-layer. This lyophilisate comprises either

(A) a fluorophor-containing compound or a compound as reaction partner R3 or a mixture thereof, provided that reaction partner R1 is immobilized on the excitation surface 30; or

(B) reaction partner R1 or a fluorophor-containing compound or a compound as reaction partner R3 or a mixture thereof containing two or three of said constituents, provided that said anchoring compound is immobilized on the excitation surface 30;

said reaction partner R3 having an affinity to the substance being assayed as reaction partner R2, wherein said reaction partner R3 comprises optionally a fluorophore-containing moiety, and said fluorophore-containing compound having an affinity to reaction partner R2 or to reaction R3.

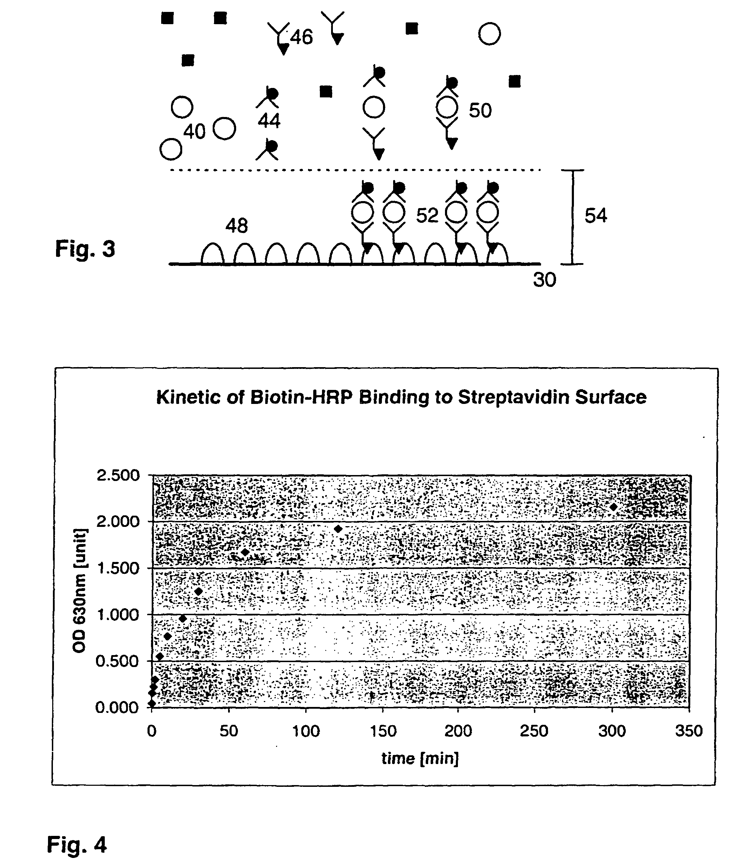

In preferred embodiments of the present invention, the terms ""anchoring compound", ""reaction partner R1", ""reaction partner R2" and ""reaction partner R3" in general, include each one part of ligand-binding system such as monoclonal or polyclonal antibodies, proteins functioning as antigens, proteins having an affinity to specific compounds, such as streptavidin, avidin etc., and compounds having an affinity to e.g. specific proteins, such as biotin. For example, the anchoring compound immobilized on the excitation surface, is streptavidin; the reaction parter R1 is a monoclonal antibody directed against reaction partner R2, having a biotin conjugated thereto in order to allow immobilisation on the excitation surface via the streptavidin/biotin-system; the reaction partner R2 which is the substance being assay, functions as an antigen; and reaction partner R3 is a monoclonal antibody directed against reaction partner R2, having a fluorphor-containing compound conjugated thereto in order to allow fluorescence measurements (see also Fig. 3).

Further, according to the present invention there is provided a process for the preparation of a cuvette as defined above, comprising the step of:

(a) immobilizing reaction partner R1 or the anchoring compound on the excitation surface 30 of the cuvette.

The process of the present invention may further comprise the steps of:

(b) applying a freezable (preferably aqueous) solution I which may contain one or more buffer compounds such as HEPES, one or more proteinaceous compounds such as BSA, one ore more cryoprotectants such as poly (ethylene glycol), one or more lyoprotectans such as sucrose, one or more detergents such as n-octyl-β-D-glucopyranoside, one or more antioxidants such as ascorbic acid, one or more hydrophilic compounds such as dextran, one or more complexing agents/anticoagulants such as EDTA and optionally bacteriostatic compounds such as Trimethoprim and/or Sulfamethoxazole and a mixture containing one or more of these constituents, onto said immobilized reaction partner R1 or the immobilized anchoring compound; and

(c) freezing said solution I to obtain a frozen spacer-layer.

After step (c) of the process of the present invention, the frozen content of the cuvette can be lyophilized to obtain a cuvette which is ready to use for assaying substances.

The process of the present invention may further comprise the steps of:

(d) applying a freezable (preferably aqueous) solution II which may contain one or more buffer compounds such as HEPES, one or more proteinaceous compounds such as BSA, one or more hydrophilic compounds such as dextran, one ore more cryoprotectants such as poly(ethylene glycol), one or more lyoprotectans such as sucrose, one or more detergents such as n-octyl-β-D-glucopyranoside, one or more antioxidants such as ascorbic acid, one or more ionic and/or nonionic surfactants such as Tween 20 or Brij35 T, one or more salts such as NaCl, one or more fillers such Glycin and optionally bacteriostatic compounds such as Trimethoprim and/or Sulfamethoxazole, one or more dyes such as Lissamine Green B, Indigocarmine, Brilliant Black or Cu-Chlorophyll, and a mixture containing one or more of these constituents,
containing either (A) a fluorophor-containing compound or a compound as reaction partner R3 or a mixture thereof, provided that reaction partner R1 is immobilized on the excitation surface 30, or (B) reaction partner R1 or the fluorophor-containing compound or a compound as reaction partner R3 or a mixture thereof containing two or three of said constituents, provided that the anchoring compound is immobilized on the excitation surface 30, onto said frozen spacer-layer;

(e) freezing said solution II to obtain a frozen solution II on the frozen solution I; and

(f) lyophilizing the frozen content in the cuvette to obtain a lyophilisate which is ready to be used for assaying substances.

The spacer layer should completely cover the surface and, prior to lyophilisation, is a frozen solid, before the next reaction partner, such as reaction partner R3 is added. This addition usually not melt the frozen spacer layer, but if at all, only the top of the spacer layer will melt. It is essential for the functionality of the assay to be carried out with that the next reaction partner will not be in direct contact with reaction partner R1 or the anchoring compound at any time during the process.

In the sense of the present invention, the term "substance being assayed" corresponds to the term "reaction partner R2", as already mentioned above.

The cuvette of the present invention can be used in methods for medical or veterinary medical diagnostics, food analysis, environmental analysis, chemical or biological analysis, or analysis of fermentation processes, preferably for the qualitative and/or quantitative determination of substances via immunological reactions.

The method using the cuvette according to the present invention, includes the steps of:

- placing in contact with the immobilized reaction partner R1 or with the immobilized anchoring compound or with the lyophilized spacer-layer a solution that contains the substance being assayed as reaction partner R2 and either (A) a fluorophor-containing compound or a compound as reaction partner R3 or a mixture thereof, provided that the reaction partner R1 is immobilized on the excitation surface 30, or (B) reaction partner R1 or a fluorophor-containing compound or a compound as reaction partner R3 or a mixture thereof containing two or three of said constituents, provided that said anchoring compound is immobilized on the excitation surface 30, wherein a complex forms on the immobilized reaction partner R1 or on the immobilized anchoring compound, said complex containing either

      (i) reaction partner R1 and reaction partner R2 which comprises a fluorophor-containing moiety or a fluorophor-containing compound conjugated thereto; or
      (ii) reaction partner R1, reaction partner R2 and reaction partner R3 which comprises a fluorophor-containing moiety or a fluorophor-containing compound conjugated thereto; or
      (iii) reaction partner R1, reaction partner R2, reaction partner R3 and a fluorophor-containing compound; or
      (iv) the anchoring compound, reaction partner R1 and reaction partner R2 which comprises a fluorophor-containing moiety or a fluorophor- containing compound conjugated thereto; or
      (v) the anchoring compound, reaction partner R1, reaction partner R2 and reaction partner R3 which comprises a fluorophor-containing moiety or a fluorophor-containing compound conjugated thereto; or
      (vi) the anchoring compound, reaction partner R1, reaction partner R2, reaction partner R3 and a fluorophor-containing compound; and

- exciting the fluorophor bonded to the excitation surface 30 via said complex by the evanescence field of a light source, (i.e. by the evanescence field generated within the cuvette (or base portion) when applying an excitation light beam of an external excitation light source) and measuring the fluorescence produced.

In a more preferred embodiment of the present invention the method uses the cuvette containing lyophilized reaction partner R1 or the anchoring compound, the lyophylized spacer-layer, and either (A) a fluorophor-containing compound or a compound as reaction partner R3 or a mixture thereof, provided that reaction partner R1 is immobilized on the excitation surface 30, or (B) reaction partner R1 or a fluorophor-containing compound or a compound as reaction partner R3 or a mixture thereof containing two or three of said constituents, provided that said anchoring compound is immobilized on the excitation surface 30, said method including the steps of:

- placing in contact with the lyophilized content in the cuvette a solution that contains the substance being assayed as reaction partner R2, wherein a complex forms on the immobilized reaction partner R1 or on the immobilized anchoring compound as outlined above; and

- exciting the fluorophor bonded to the excitation surface 30 via said complex by the evanescence field of a light source and measuring the fluorescence produced.

In preferred embodiments of the present invention, the method to be used in the cuvette is based on an ELISA using a fluorophor instead of a colour-formation system.

According to the present invention, the terms "complex" and ""conjugate" are understood to be a molecular coupling or bonding between two or more preferably chemical or biochemical substances. The complex or conjugate is preferably formed by means of selective and/or specific reactions, especially preferred by antigen-antibody reactions.

According to the invention, the term ""reactions" includes both covalent and non-covalent interactions of two or more reaction partners, wherein both types of interaction can take place one after another within a complex. Non-covalent interaction can mean, for example, Van der Waals interaction, polar and/or ionic interaction of reaction partners. The term "reaction partner" means in general a compound with an affinity for another substance in the present invention.

In one preferred embodiment of the method in the present invention, the substance being assayed as reaction partner R2 can itself have an affinity for reaction partner R1 immobilized on the surface, and can therefore bond directly with that reaction partner R1. When the substance being assayed is an antibody, for example, an antigen specific for that antibody can be placed on the surface, or vice versa.

In another preferred embodiment, the substance, i.e. reaction partner R2, being assayed itself has (basically) no affinity or only a small affinity for an anchoring compound on the surface. In this case, the solution to be placed in contact with the surface contains, for example, another compound that contains reaction partner R1 and a binding site for the substance being assayed. Reaction partner R1 can bond to the anchoring compound on the surface and thus fixes the substance being assayed indirectly to the surface. This other connection serves as a bridge element between the substance being assayed and the anchoring compound on the surface. For example, avidin can be present as the anchoring compound on the surface. The other compound (i.e. reaction partner R1) then contains, besides a bonding site for the substance being assayed, for example biotin which can bond to the avidin immobilized on the surface. This embodiment has the advantage that a surface coated with avidin (or streptavidin), unlike many antibodies and antigens, can be better lyophilized and are very stable in dried or lyophilized of form. In addition, the avidin (or streptavidin)/biotin system has a very high dissociation constant KD. It is also possible for a series of different assays to be done on a surface coated with avidin (or streptavidin) and to assay only the other compound, which is placed in contact with the surface with the solution, on the substance being assayed.

Figure 3 shows this embodiment of the method used in the present invention schematically. In the solution placed in contact with the excitation surface 30 are, next to one another, the substance (i.e. reaction partner R2) being assayed 40, a reaction partner R3 44 comprising a fluorophor-containing moiety or compound, and reaction partner R1 46 having an affinity to the anchoring compound 48. The anchoring compound 48 is bonded to the excitation surface. The reaction partner R3 and the reaction partner R1 are absorbed on the substance being assayed (conjugate 50), and the conjugate 50 is bonded via reaction partner R1 on the anchoring compound 48 on the surface to form complex 52. Thus, complex 52, which includes reaction partner R3 containing a fluorophor, is bonded to the excitation surface 30 and can be assayed by measuring the fluorescence in the evanescence field 54.

For this embodiment of the method in the present invention, besides the avidin (or streptavidin)/biotin system, all ligands or ligand-binding systems are suitable in which proteins, for example, have selective and/or specific binding sites for one or more ligands, like for example histidine, histidine tags, lectin and/or digoxigenin, and naturally antigen/ antibody systems, as already outlined above.

According to the present invention, the terms ""fluorophor", ""fluorophor-containing compound" and ""fluorophor-containing moiety" do not exhibit particular limitations as long as being fluorescent and include, for example, a fluorescing compound, such as phycobilisomes, phycobiliproteins, low-molecular weight fluorescing chemical compounds or quantum dots. According to the present invention, phycobili proteins, such as Allophycocyanine (APC), Cryptofluor Crimson or Cryptofluor Red can be used as fluorescing proteins. Cy5 or BODIPY (fluorophores having 4,4-diluor-4-bora-3a,4a-diaza-s-indazene) can be cited as examples of low-molecular weight fluorescing compounds. Fluorescing dyes with an efficient absorption in the wavelength range from 600 to 700 nm are preferred.

Instead of a fluorophor, a fluorophor precursor compound can be used, from which the fluorophor is released before the measurement process, for example, by changing the pH value or by splitting a protective group.

According to the present invention, the terms ""fluorophor" and ""fiuorophor-containing compound" and ""fluorophor-containing moiety" also include phosphorescing compounds. If such a phosphorescing compound is used as a fluorophor, the phosphorescence radiated, which is staggered in time from the excitation, is determined. Thus, it is possible to separate the radiation time from the measurement time.

This compound containing a fluorophor may also have a binding site for the substance being assayed. For example, the fluorophor can come bonded to an antibody as reaction partner R3. This antibody containing a fluorophor can preferably react in an antigen-antibody reaction with the substance being assayed as an antigen, for example a protein.

In another embodiment, the substance (i.e. reaction partner R2) being assayed itself comes as a compound containing a fluorophor. In this embodiment, competitive assays are done, which are characterized especially by a low detection limit.

With the method in the present invention, a wide variety of substances can be detected. The method is especially suitable for assaying biologically active substances, like hormones, such as proteinaceous or non-proteinaceous hormons, proteins like antigens, antibodies or haptenes, nuclein acids such as DNS, oligonucleotides or RNA, pharmaceuticals, viruses, bacteria, etc. But the method can also be used to detect environmental poisons, toxins, drugs of abuse, therapeutic drugs, etc. The method of the present invention includes also double antigen antibody assays for the detection of e.g. immunoglobins such as HIV-, HBC- or HCV-antibodies in human body fluids e.g. blood.

It is especially preferred for the substances being assayed to be detected by immunological reactions.

When exciting the fluorophor bonded to the surface with an evanescence field, a beam of light is pointed at the bottom of the surface at an angle such that total reflection occurs at the cuvette/solution phase boundary. This forms an evanescence field above the surface in the solution, which can penetrate up to several hundred nanometers into the fluid. According to the present invention, an angle of incidence of at least 60° to 90° is preferred, so that an evanescence field at a height up to 400 nm, preferably 200 nm, and especially preferred 50 to 150 nm, is formed over the surface. Within this evanescence field, the beamed light may excite suitable fluorophors. The fluorescent light emitted is detected with a photomultiplier, for example, and evaluated.

Since only the fluorophor bonded to the surface is in the evanescence field, only this bonded fluorophor is optimally excited and emits photons. A compound that contains fluorophor and is not bound in the solution is not in the area of the evanescence field, is therefore basically not excited and also basically emits no photons. This arrangement thus allows quantitative determination of fluorophor bonded to the surface in the presence of fluorophor in the supernatant solution without a prior separation and/or washing step.

Monochromatic light can be used as the light source. Light should be used that has a wavelength that preferably does not interfere with the emission of the fluorophor. A laser is especially preferred as a light source, whose light emits a wavelength of at least 635 nm. In particular, if the supernatant solution is a serum, lasers that emit wavelengths from 600 to 700 nm are preferred, since serum's inherent fluorescence is roughly at 580 nm.

In one embodiment of the invention, the addition of the fluorophor bonded to the surface can be measured directly (in real time) with a time-progressive reaction. Since the quantity of a fluorophor bonded to the surface is directly proportional to the original amount of compound containing fluorophor, the method in the invention makes it possible to make a quantitative determination of reactants found in the solution in real time without other additional washing and/or pipetting steps.

Since the absorption coefficients and the emission properties of fluorophors are very good, the detection limits are small. After only a few minutes, reactions can be assessed qualitatively and/or quantitatively.

However, the scatter of the light beam in the cuvette, which is not ideal, poses a problem, even if physical measures are taken to reduce the scatter light. Due to scatter, light also gets into the volume in the cuvette and causes background fluorescence there. The term "volume" is understood in the present invention to be the liquid outside the evanescence field, which contains unbonded compounds containing fluorophor. The polarization of the light beam can also be turned in both plastic and glass cuvettes. This leads, in particular, to reflections of the excitation light during uncoupling, creating so-called vagabond light, which, along with volume and surface scatter effects, can result in excitation of the volume.

According to the present invention, excitation of the fluorophor in the volume can be further suppressed if the solution to be placed in contact with the surface has at least one dye added to it that has an absorption in the absorption and/or emissions range of the fluorophor.

The absorption of the dye added to the volume is coordinated with the absorption and/or emission range of the fluorophor in the invention. One individual dye or a mixture of dyes can be used. The absorption range of the fluorophor generally correlates with the wavelength of the light source used. It is not necessary that the dye have an absorption maximum in this spectral range; a shoulder in the absorption spectrum can suffice. For example, if fluorophors like APC or Cy5 are used, the dye used can have an absorption between 600 nm and 700 nm, like for example Brilliant Blue FCF. The concentration of dye added depends on the frequency of the light radiated. The concentration of dye can be adjusted, depending on the dye, so that the penetrating light can basically be absorbed within 1 mm above the surface. To determine the optimal concentration of dye, first the volume fluorescence and the fluorescence in the evanescence field, i.e., the surface fluorescence, are measured for various concentrations of dye. Then, the ratio of surface fluorescence to volume fluorescence is plotted against the concentration of dye. The maximum of this ratio represents the optimum concentration of dye. According to the present invention, "signal/noise ratio" is the ratio of surface fluorescence (signal) to volume fluorescence ("noise"). "Basically absorbed" can mean an intensity cancellation of 70%, preferably 80% and especially preferred at least 90%.

For example, when Brilliant Blue FCF is used as the dye, a concentration of 0.04 mM is enough to suppress far more than 95% of the volume fluorescence. For example, the concentration of Brilliant Blue FCF is preferably at least 0.001 mM.

The small dimension and low price make the cuvette of the present invention feasible in routine diagnostics and analysis. In practical application, this type of cuvette can be pre-prepared and sold commercially closed with a special label. As already outlined above, the pre-preparation includes coating the surface of the cuvette with the first reaction partner R1 and, if necessary, then blocking the uncoated places. It is especially preferred if the coated cuvette comes lyophilized or dried. Providing the cuvette with a serial number makes it possible to have clear attribution of the manufacturing lot, the detection reaction and the sample at any time.

Examples of specific applications that can be cited are a wide variety of assays that are based on the principle of ELISA. An ELISA test can be used to determinate the concentration of antigens or antibodies. Examples of specific antigens are HBV S-protein, HCG, cardiac marker proteins, and hormones such as steroid hormones, peptide hormones, thyroid hormones. Antibody assays, indicative of a previous infection or indicative for a specific disease symptom, such as a HIV antibody assay, Hepatitis S antibody assay or the antibody mediated Heparin Induced Thrombocytopenia can be cited. Also the detection of plant protection products, such as atrazine, in drinking water is possible using the cuvette of the present invention.

Non-immuno assays can also be performed using the cuvette of the present invention, when a detecting reagent can be labelled and this reagent is a specific ligand for a receptor. Therefore a receptor molecule is bound to the surface of the cuvette and the labelled ligand or hormone etc., can specifically bind to the receptor. Hormone receptors can be natural receptors or recombinant receptor molecules. This can be a competitive assay for pharmaceutical drugs where the drug is fluorescently derivatized and the receptor protein is immobilised on the surface of the cuvette. Alternatively, the drug is immobilised on the surface of the receptor and the fluorescent labelled receptor is binding. The application can also be used for recreational drugs.

Also RNA or DNA detection can be performed with the cuvette of the present invention. A complementary strand immobilised on the surface of the cuvette can capture a labelled oligonucleotide. The oligonucleotide can be labelled for example with APC.

When using the cuvette according to the present invention, the above defined methods for assaying substances result surprisingly in analytical sensitivity of at least 10 times better than in common ELISAs and in analysis time of at least 10 times shorter than in common ELISAs.

The present invention will be further explained below using examples, which are, of course, not limiting the scope of protection conferred by the claims.

Examples

In the following examples the photons were measured every second over a time of 10 min (=600sec). Normally, the photons counted at the start at 0 min and after 10 min are measured and the difference is calculated. This difference is positive and directly proportional to the antigen measured in the assay. If a number of statistical events, e.g. 10000 photons (n) is observed, the statistical error is calculated as three times to the square root of n. In this example 3 x square root of 10000 = 3 x 100 = 300 photons.

In the experiment, there is measured not only these two time points, but during these 10 min 600 time points. The points fit on a straight line. if now a trend function is generated with a linear regression function and a linear curve is calculated, the overall error for a 99,99% confidence interval is reduced to about 30 photons. This means one tenth of the 300 photons error achieved by the 2 point calculation. Therefore this linear regression improves the analytical detection limit by a factor of 10.

Example 1: Kinetic of biotin-HRP binding to streptavidin surface

A Nunc maxisorp microplate was coated with a solution of neutravidin (10µg/ml in 0.1M NaHCO$_3$) overnight at room temperature. Then it was washed 3 times with TBST (10mM Tris pH 7.5, 150mM NaCl, 0.1%Tween 20). A solution of biotinylated horseraddish peroxidase ("HRP", commercially available from Pierce) (10ng/ml in TBST) was added to the wells and incubated for various times from 1 minute to 6 hours. The wells were washed 6 times with TBST and 3 times with TBS (10mM Tris pH 7.5, 150mM NaCl). Bound HRP was revealed by TMB (commercially available form KPL) and the optical density at 630nm measured after 10 minutes incubation at room temperature. The results are shown in Figure 4.

Figure 4 is a plot of OD$_{630}$ as a function of binding time for the biotinylated HRP to the microplate. After 10 minutes one observes an OD of approximately 0.75. The maximum OD after 6 hours of reaction time is 2.10. After 10 minutes a signal of approximately 30% of the maximum value is shown for HRP by a diffusion based assay and so it is possible to measure a meaningful result. If a for example fluorescence detection system is available one can compensate for the less bound label and still have a fast and sensitive assay.

Example 2: Mouse IgG titration

(A) ELISA

A Nunc maxisorp microplate well was coated with a solution of streptavidin (10µg/ml in PBSplus (100mM K$_2$HPO$_4$/KH$_2$PO$_4$, 100mM NaCl pH 7.5)) overnight at room temperature. Then the solution was aspirated and the wells washed 4 times with PBS (10mM K$_2$HPO$_4$/KH$_2$PO$_4$, 137mM NaCl pH 7.4). To block remaining reactive sites, a solution of 1 %BSA in PBSplus was added to the well and left for 1 h.

A one-step and a three step ELISA procedure were performed. The assay is a sandwich ELISA detecting mouse IgG.

The one-step ELISA was carried out by incubating a solution of biotinylated goat anti-mouse IgG (commercially available from Jackson) at 1 µg/ml, goat anti-mouse HRP (commercially available from Jackson) at 8 µg/ml and various amounts of mouse IgG (commercially available from Jackson) in 1% BSA PBSplus containing 0.025% Tween 20 for 0,5h at room temperature

The three-step ELISA was carried out by a 1 h incubation with the biotinylated goat anti mouse IgG at 1 µg/ml in 1% BSA PBSplus containing 0.025% Tween 20 followed by three PBS washes. Then a incubation with various amounts of mouse IgG in the same buffer followed by three PBS washes, followed by a 1 h incubation with goat anti mouse HRP at 8 µg/ml in the same buffer.

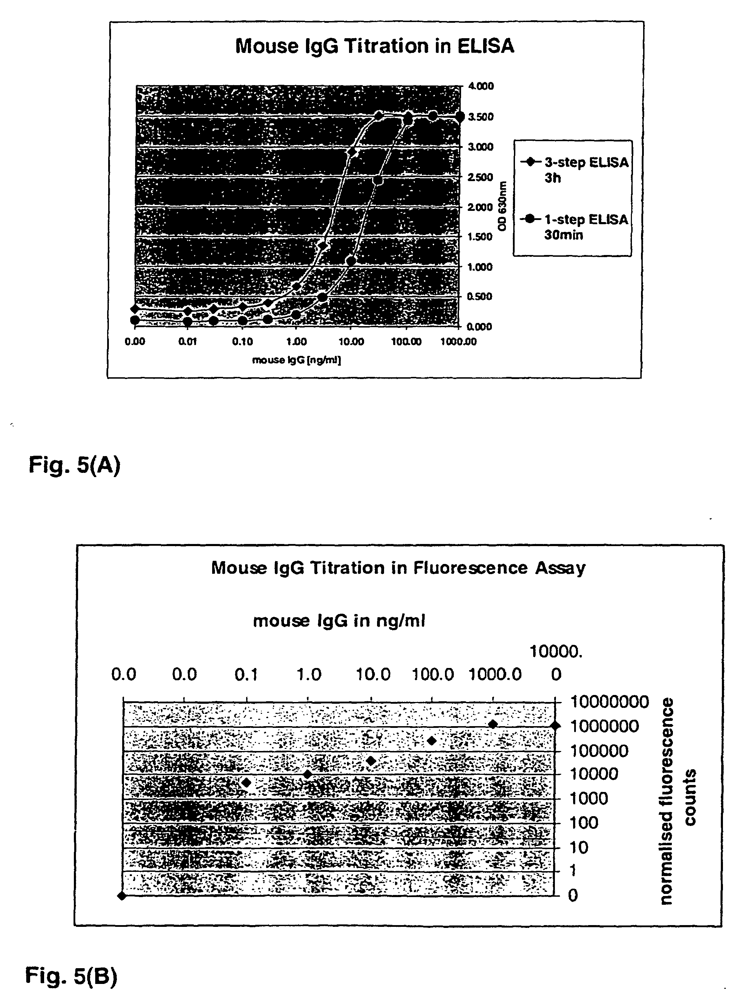

After these incubation steps the procedure was identical for both ELISA methods and consisted of 5 PBS washes followed by the addition of TMB for colour development for 10 minutes and reading the OD at 630nm. The results are shown in Figure 5 (A).

Figure 5 (A) shows a plot of $OD_{630}$ as a function of the mouse IgG concentration in the sample. Detection limits of mouse IgG are approximately 3ng/ml for the one-step ELISA after 40 minutes or 1 ng/ml for the three-step ELISA after 3 hours.

Example 2: Mouse IgG titration

(B) Fluorescence assay

A fluorescence chip as an example for the cuvette of the present invention, made by injection molding from polystyrene was γ-radiated with a Cobalt-60 source. The resulting polystyrene surface is activated for protein absorption. The wells were coated by absorption of streptavidin at 10ug/ml in PBSplus (100mM $KPO_4$, 100mM NaCl pH 7.5) overnight at room temperature. The solution was aspirated and the wells washed 4 times with PBS (10mM $K_2HPO_4$/ $KH_2PO_4$, 137mM NaCl pH 7.4). To block remaining reactive sites, a solution of 0.25% Tween 20 in PBSplus was added to the well and left for 1 hour.

A one-step immunoassay detecting mouse IgG was performed and bound fluorescence measured by evanescence excitation.

A mixture of biotinylated goat anti-mouse IgG at 1 μg/ml, goat anti-mouse APC conjugate made according to the procedure given by the supplier of activated APC (commercially available from Intergen) at 10 μg/ml and various amounts of mouse IgG in 1% BSA PBSplus containing 0.05% Tween 20 were added to the polystyrene fluorescence chip. The chip was then placed immediately in the reader and the emission of fluorescence photons was monitored over time and recorded. As the reaction proceeds, fluorescent molecules bind to the surface and the measured fluorescence increases with time. Measuring the photon counts at time 0 and at 10 minutes and calculating the difference give a number of photon counts due to the biochemical reaction at the surface excited by the evanescence field. This increase of photons depends on the antigen concentration in the sample. There is a minor variation in the background from chip to chip. This chip to chip-variation does not change during the measuring time of 10 minutes and therefore does not appear in the result. The amount of mouse IgG was titrated over the range from 0.1 to 10000 ng/ml. The results are shown in Figure 5 (B).

Figure 5 (B) shows the fluorescence photons expressed as counts measured in 10 second intervals as a function of the mouse IgG concentration in the sample.

The detection limit is given by the statistical variation of measured photons, which correspond to 3 times the square root of the background emission of photons in the apparatus. The background fluorescence is in this example 500000 which gives a statistical variation of 3 x 707 =2121 counts.

The sample containing 0.1 ng/ml mouse IgG resulted in a signal of 5000 photons, well above the detection limit of the device. Therefore the system that is ten times more sensitive than a comparable ELISA as described in Example 2 (A).

Example 3:Titration of mouse IgG in different matrices

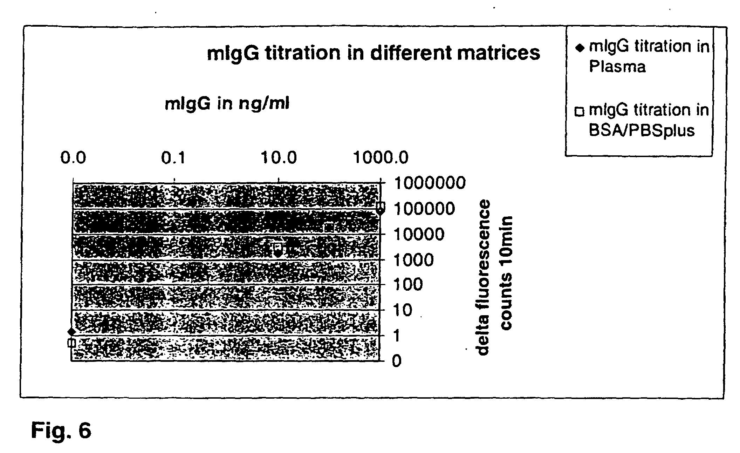

Experimental conditions and reagents are the same as shown in Example 2 (B). The sandwich assay uses a mixture of biotinylated goat anti-mouse IgG at 1 μg/ml, goat anti-mouse APC conjugate made according to the procedure given by the supplier of activated APC at 10 μg/ml and various amounts of mouse IgG (commercially available from Jackson). Measurements were made in two different matrices: (a) in 1% BSA PBSplus containing 0.05% Tween 20; and (b) in human EDTA plasma. The results are shown in Figure 6.

Figure 6 shows the fluorescence photons expressed as counts measured in 1 second intervals as a function of the mouse IgG concentration in the sample.

Results are comparable in both buffer systems, using either the synthetic mixture of BSA, PBS, Tween 20 or a natural matrix such as human plasma. Plasma does not seem to generate noticeable autofluorescence.

Example 4: Preparation of lyophilisate in the cuvette

A polystyrene chip as an example for the cuvette of the present invention was provided and an avidin layer was prepared by absorption onto polystyrene. Alternatively, one of the methods mentioned above (poly-L-Lysine or allyl dextran) was used. The term "avidin" in the general context encompasses avidin or streptavidin or neutravidin or any other biotin binding molecule. 50 μl/well of solution I (e.g. 20mM Hepes pH7.5, 1% BSA, 1% Dextran T70, 10mM EDTA and optionally 32mg/ml Trimethoprim and 160mg/ml Sulfamethoxazole) was added and frozen for 4 h at -20°C. The solution I forms the spacer-layer. Then 10 μl/well solution II (e.g. 20mM Hepes pH7.5, 1% BSA, 1% Dextran T70, 2% Glycin, 1% Brij, 0,5% Tween 20, 100mM NaCl and optionally 32mg/ml Trimethoprim and 160mg/ml Sulfamethoxazole and a dye such as Lissamine Green B, Indigocarmin, Brilliant BlackBN or Cu-Chlorophyllin) was added on the top of the frozen spacer layer and frozen for 4h at - 20°C. Solution II contains the reactive immunglobulins, e.g. 50μg/ml goat anti-mouse IgG-XL-APC or 5 μg/ml goat anti-mouse IgG. Finally, it was lyophilized to give the cuvette ready for use.

**List of Reference Numerals**

| | |
|---|---|
| 10 | cuvette |
| 12 | handling portion |
| 14 | recess |
| 16 | analysing portion |
| 18 | well portion |
| 20 | well |
| 22 | side wall members of wells |
| 24 | base portion |
| 26 | first surface |
| 28 | second surface |
| 30 | excitation surface |
| 32 | base surface |
| 26S | first side of trapezoid |
| 28S | second side of trapezoid |
| 30S | top side of trapezoid |
| 32S | base side of trapezoid |
| 40 | reaction partner R2 |
| 44 | reaction partner R3 |
| 46 | reaction partner R1 |
| 48 | anchoring compound |
| 50 | conjugate |
| 52 | complex |
| 54 | evanescence field |

**Claims**

1. A cuvette (10) for a reader device for assays using the evanescence field method comprising:

   - at least one well portion (18) having at least one well (20) for receiving a solution containing substances to be assayed; and
   - at least one base portion (24) supporting side wall members (22) of the well portion (18) and providing an excitation surface (30) of the well (20);

   wherein the base portion (24) is made of an optically transparent material and has a cross-sectional shape of an isosceles trapezoid in a plane (B-B) perpendicularly intersecting the excitation surface (30) of the well (20), the trapezoid having first and second sides (26S, 28S) of equal length and parallel base and top sides (32S, 30S); wherein the base portion (24) further comprises

   - a base surface (32) being spaced apart from and parallel to the excitation surface (30), the cross section of the base surface (32) in said plane (B-B) being the base side (32S) of the trapezoid;
   - a first surface (26) for receiving an excitation light beam (34) of an external excitation light source, the cross section of the first surface (26) in said plane (B-B) being the first side (26S) of the trapezoid; and
   - a second surface (28) opposite to the first surface (26), the cross section of the second surface (28) in said plane (B-B) being the second side (28S) of the trapezoid;

   and wherein the base portion (24) is adapted to guide the excitation light beam (24) at least partially along an optical round path from a point of incidence on the first surface (26) via reflections on the excitation surface (30), the second surface (28) and the base surface (32) back to the point of incidence.

2. The cuvette (10) according to claim 1, wherein the height H of the trapezoid is given by

$$H = -\frac{A\sin(\beta - \gamma)}{2(-\cos(\beta - \gamma) + \sin(\beta - \gamma)\tan(\gamma))} - \left(-\frac{A}{2} + \frac{A\sin(\beta - \gamma)\tan(\gamma)}{2(-\cos(\beta - \gamma) + \sin(\beta - \gamma)\tan(\gamma))}\right)\tan(\beta + \gamma),$$

wherein $(90° - \gamma)$ is the trapezoid base angle between the base side (32S) and the first side (26S), $n_2$ is the refractive index of the base portion (24), A is the length of the top side (30S) of the trapezoid and

$$\beta \approx \arcsin\left(\frac{\sin(\arctan(n_2))}{n_2}\right).$$

3. The cuvette (10) according to claim 1 or 2, wherein the base side reflection angle $\delta = 90° - (\beta + \gamma)$ is greater than $\arcsin(1 / n_2)$, $n_2$ being the refractive index of the base portion (24) and

$$\beta \approx \arcsin\left(\frac{\sin(\arctan(n_2))}{n_2}\right).$$

4. The cuvette (10) according to anyone of the preceding claims, wherein the excitation side reflection angle $\varepsilon = 90° - (\beta - \gamma)$ is greater than $\arcsin(1 / n_2)$, $n_2$ being the refractive index of the base portion (24) and

$$\beta \approx \arcsin\left(\frac{\sin(\arctan(n_2))}{n_2}\right).$$

5. The cuvette (10) according to anyone of the preceding claims, wherein the trapezoid is substantially a rectangle having a height H and a width A and $A / H \approx n_2$.

6. The cuvette (10) according to anyone of the preceding claim, wherein the well portion (18) and the base portion (24) are unitarily formed of a resin material, preferably comprising PMMA, polystyrene, polycarbonate, SAN, cyclocopolymerolefine or polyolefine.

7. The cuvette (10) according to anyone of the preceding claims, wherein the cuvette (10) comprises a plurality of wells (20).

8. The cuvette according to anyone of claims 1 to 7, wherein the excitation surface (30) is hydrophilic.

9. The cuvette according to anyone of claims 1 to 7, wherein the excitation surface (30) is at least partially coated with a hydrophilic compound.

10. The cuvette according to anyone of claims 1 to 9, wherein a compound as reaction partner R1 is immobilized on the optionally coated excitation surface (30), said reaction partner R1 having an affinity to the substance being assayed as reaction partner R2.

**11.** The cuvette according to claim 10, wherein said reaction partner R2 comprises a fluorophor-containing moiety.

**12.** The cuvette according to anyone of claims 1 to 9, wherein an anchoring compound for a compound as reaction partner R1 is immobilized on the optionally coated excitation surface (30), said reaction partner R1 having an affinity to the substance being assayed as reaction partner R2.

**13.** The cuvette according to anyone of claims 10 to 12, wherein said reaction partner R1 or said anchoring compound is present in lyophilized form.

**14.** The cuvette according to claim 13, wherein said lyophilized reaction partner R1 or said lyophylized anchoring compound is covered by a lyophilized spacer-layer containing one or more buffer compounds, one or more proteinaceous compounds, one or more hydrophilic compounds or one or more complexing agents/anticoagulants and optionally bacteriostatic compounds, or a mixture containing one or more of these constituents.

**15.** The cuvette according to claim 14, wherein said lyophilized spacer-layer is covered by a lyophilisate comprising either

(A) a fluorophor-containing compound or a compound as reaction partner R3 or a mixture thereof, provided that the reaction partner R1 is immobilized on the excitation surface (30); or
(B)
reaction partner R1 or a fluorophor-containing compound or compound as reaction partner R3 or a mixture thereof containing two or three of them, provided that said anchoring compound is immobilized on the excitation surface (30);

said reaction partner R3 having an affinity to the substance being assayed as reaction partner R2, wherein said reaction partner R3 comprises optionally a fluorophor-containing moiety, and said fluorophor-containing compound having an affinity to reaction partner R2 or to reaction partner R3.

**16.** A process for the preparation of a cuvette according to anyone of claims 10 to 15, comprising the step of:

(a) immobilizing reaction partner R1 or said anchoring compound on the excitation surface (30) of the cuvette defined in any one of claims 1 to 9.

**17.** The process according to claim 16, further comprising the steps of:

(b) applying a freezable solution I containing one or more buffer compounds, one or more proteinaceous compounds, one or more hydrophilic compounds or one or more complexing agents/anticoagulants and optionally bacteriostatic compounds, or a mixture containing one or more of these constituents onto said immobilized reaction partner R1 or said immobilized anchoring compound; and

(c) freezing said solution I to obtain a frozen spacer-layer.

**18.** The process according to claim 17, wherein after step (c) the frozen solution I is lyophilized.

**19.** The process according to claim 17, further comprising the steps of:

(d) applying a freezable solution II containing either (A) a fluorophor- containing compound or a compound as reaction partner R3 or a mixture thereof, provided that the reaction partner R1 is immobilized on the excitation surface (30), or (B) reaction partner R1 or fluorophor- containing compound or a compound as a reaction partner R3 or a mixture thereof containing two or three of them, provided that said anchoring compound is immobilized on the excitation surface (30), onto said frozen spacer-layer;
(e) freezing said solution II to obtain a frozen solution II on the frozen solution I; and
(f) lyophilizing the frozen content in the cuvette to obtain a lyophilisate.

**20.** Use of the cuvette according to anyone of claims 1 to 15 in medical or veterinary medical diagnostics, food analysis, environmental analysis, chemical or biological analysis, or analysis of fermentation processes.

**21.** Use of the cuvette according to anyone of claims 1 to 15 for a qualitative and/or quantitative determination of substances via immunological reactions.

22. Use of the cuvette according to anyone of claims 10 to 13 for the qualitative and/or quantitative determination of substances via immunological reactions, including the steps of:

- placing in contact with the immobilized reaction partner R1 or with the immobilized anchoring compound or with the lyophilized spacer-layer a solution that contains the substance being assayed as reaction partner R2 and either (A) a fluorophor-containing compound or a compound as reaction partner R3 or a mixture thereof, provided that the reaction partner R1 is immobilized on the excitation surface (30), or (B) reaction partner R1 or a fluorophor-containing compound or a compound as reaction partner R3 or a mixture thereof containing two or three of them, provided that said anchoring compound is immobilized on the excitation surface (30), wherein a complex forms on the immobilized reaction partner R1 or on the immobilized anchoring compound, said complex containing either

> (i) reaction partner R1 and reaction partner R2 which comprises a fluorophor-containing moiety or a fluorophor-containing compound conjugated thereto; or
> (ii) reaction partner R1, reaction partner R2 and reaction partner R3 which comprises a fluorophor-containing moiety or a fluorophor-containing compound conjugated thereto; or
> (iii) reaction partner R1, reaction partner R2, reaction partner R3 and the fluorophor-containing compound; or
> (iv) the anchoring compound, reaction partner R1 and reaction partner R2 which comprises a fluorophor-containing moiety or a fluorophor- containing compound conjugated thereto; or
> (v) the anchoring compound, reaction partner R1, reaction partner R2 and reaction partner R3 which comprises a fluorophor-containing moiety or a fluorophor-containing compound conjugated thereto; or
> (vi) the anchoring compound, reaction partner R1, reaction partner R2, reaction partner R3 and the fluorophor-containing compound; and

- exciting the fluorophor bonded to the excitation surface (30) via said complex by the evanescence field of a light source and measuring the fluorescence produced.

23. Use of the cuvette according to claim 15 for a qualitative and/or quantitative determination of substances via immunological reactions, including the steps of:

- placing in contact with the lyophylized content in the cuvette, a solution that contains the substance being assayed as reaction partner R2, wherein a complex forms on the immobilized reaction partner R1 or on the immobilized answering compound, said complex containing either

> (i) reaction partner R1 and reaction partner R2 which comprises a fluorophor-containing moiety or a fluorophor-containing compound conjugated thereto; or
> (ii) reaction partner R1, reaction partner R2 and reaction partner R3 which comprises a fluorophor-containing moiety or a fluorophor-containing compound conjugated thereto; or
> (iii) reaction partner R1, reaction partner R2, reaction partner R3 and the fluorophor-containing compound; or
> (iv) the anchoring compound, reaction partner R1 and reaction partner R2 which comprises a fluorophor-containing moiety or a fluorophor-containing compound conjugated thereto; or
> (v) the anchoring compound, reaction partner R1, reaction partner R2 and reaction partner R3 which comprises a fluorophor-containing moiety or a fluorophor-containing compound conjugated thereto; or the anchoring compound, reaction partner R1, reaction partner R2, reaction partner R3 and the fluorophor-containing compound; and

- exciting the fluorophor bonded to the excitation surface (30) via said complex by the evanescence field of a light source and measuring the fluorescence produced.

**Patentansprüche**

1. Küvette (10) für ein Lesegerät für Versuche bzw. Assays unter Verwendung der Evaneszenzfeld-Methode, umfassend:

- wenigstens einen Vertiefungsabschnitt (18), der wenigstens eine Vertiefung (20) zum Aufnehmen einer Lösung aufweist, die zu untersuchende Substanzen enthält; und
- wenigstens einen Basisabschnitt (24), der Seitenwandglieder (22) des Vertiefungsabschnitts (18) abstützt und eine Erregungs- bzw. Anregungsoberfläche (30) der Vertiefung (20) zur Verfügung stellt;

wobei der Basisabschnitt (24) aus einem optisch transparenten Material hergestellt ist und eine Querschnittsform eines gleichschenkeligen Trapezoids bzw. Trapezes in einer Ebene (B-B) aufweist, die senkrecht die Erregungsoberfläche (30) der Vertiefung (20) schneidet, wobei das Trapezoid erste und zweite Seiten (26S, 28S) gleicher Länge und parallele Basis- und Oberseiten (32S, 30S) aufweist;

wobei der Basisabschnitt (24) weiters umfaßt

- eine Basisoberfläche (32), die von der Erregungsoberfläche (30) beabstandet und parallel zu dieser ist, wobei der Querschnitt der Basisoberfläche (32) in der Ebene (B-B) die Basisseite (32S) des Trapezoids ist;
- eine erste Oberfläche (26) zum Aufnehmen eines Erregungs-Lichtstrahls (34) einer extemen Erregungslichtquelle, wobei der Querschnitt der ersten Oberfläche (26) in der Ebene (B-B) die erste Seite (26S) des Trapezoids ist; und
- eine zweite Oberfläche (28) gegenüberliegend der ersten Oberfläche (26), wobei der Querschnitt der zweiten Oberfläche (28) in der Ebene (B-B) die zweite Seite (28S) des Trapezoids ist;

und wobei der Basisabschnitt (24) adaptiert ist, um den Erregungslichtstrahl (24) wenigstens teilweise entlang eines optischen runden Pfads bzw. eines optischen Umlaufpfads von einem Auftreff- bzw. Einfallspunkt auf der ersten Oberfläche (26) über Reflexionen auf der Erregungsoberfläche (30), der zweiten Oberfläche (28) und der Basisoberfläche (32) zurück zu dem Einfallspunkt zu führen.

2. Küvette (10) nach Anspruch 1, wobei die Höhe H des Trapezoids gegeben ist durch

$$H = -\frac{A\sin(\beta - \gamma)}{2(-\cos(\beta - \gamma) + \sin(\beta - \gamma)\tan(\gamma))}$$
$$- \left(-\frac{A}{2} + \frac{A\sin(\beta - \gamma)\tan(\gamma)}{2(-\cos(\beta - \gamma) + \sin(\beta - \gamma)\tan(\gamma))}\right)\tan(\beta + \gamma),$$

wobei $(90° - \gamma)$ der Trapezoidbasiswinkel zwischen der Basisseite (32S) und der ersten Seite (26S) ist, $n_2$ der Brechungsindex des Basisabschnitts (24) ist, A die Länge der oberen Seite (30S) des Trapezoids ist, und

$$\beta \approx \arcsin\left(\frac{\sin(\arctan(n_2))}{n_2}\right).$$

3. Küvette (10) nach Anspruch 1 oder 2, wobei der Basisseiten-Reflexionswinkel $\delta = 90° - (\beta + \gamma)$ größer als arcsin $(1/n_2)$ ist, wobei $n_2$ der Brechungsindex des Basisabschnitts (24) ist und

$$\beta \approx \arcsin\left(\frac{\sin(\arctan(n_2))}{n_2}\right).$$

4. Küvette (10) nach einem der vorhergehenden Ansprüche, wobei der Erregungsseiten-Reflexionswinkel $\varepsilon = 90° - (\beta - \gamma)$ größer als arcsin$(1/n_2)$ ist, wobei $n_2$ der Brechungsindex des Basisabschnitts (24) ist und

$$\beta \approx \arcsin\left( \frac{\sin(\arctan(n_2))}{n_2} \right).$$

5. Küvette (10) nach einem der vorhergehenden Ansprüche, wobei das Trapezoid im wesentlichen ein Rechteck ist, das eine Höhe H und eine Breite A aufweist und $A/H \approx n_2$ ist.

6. Küvette (10) nach einem der vorhergehenden Ansprüche, wobei der Vertiefungsabschnitt (18) und der Basisabschnitt (24) einstückig aus einem Harzmaterial geformt sind, vorzugsweise umfassend PMMA, Polystyrol, Polycarbonat, SAN, Cyclocopolymerolefin oder Polyolefin.

7. Küvette (10) nach einem der vorhergehenden Ansprüche, wobei die Küvette (10) eine Mehrzahl von Vertiefungen (20) umfaßt.

8. Küvette nach einem der Ansprüche 1 bis 7, wobei die Erregungsoberfläche (30) hydrophil ist.

9. Küvette nach einem der Ansprüche 1 bis 7, wobei die Erregungsoberfläche (30) wenigstens teilweise mit einer hydrophilen Verbindung beschichtet ist.

10. Küvette nach einem der Ansprüche 1 bis 9, wobei eine Verbindung als ein Reaktionspartner R1 auf der fakultativ beschichteten Erregungsoberfläche (30) immobilisiert ist, wobei der Reaktionspartner R1 eine Affinität zu der Substanz besitzt, die als Reaktionspartner R2 zu untersuchen ist.

11. Küvette nach Anspruch 10, wobei der Reaktionspartner R2 einen Fluorophor enthaltenden Rest umfaßt.

12. Küvette nach einem der Ansprüche 1 bis 9, wobei eine Verankerungsverbindung für eine Verbindung als Reaktionspartner R1 auf der fakultativ beschichteten Erregungsoberfläche (30) immobilisiert ist, wobei der Reaktionspartner R1 eine Affinität zu der Substanz besitzt, die als Reaktionspartner R2 untersucht wird.

13. Küvette nach einem der Ansprüche 10 bis 12, wobei der Reaktionspartner R1 oder die Verankerungsverbindung in lyophilisierter Form vorhanden ist.

14. Küvette nach Anspruch 13, wobei der lyophilisierte Reaktionspartner R1 oder die lyophilisierte Verankerungsverbindung durch eine lyophilisierte Abstandhalter- bzw. Abstandsschicht überdeckt ist, enthaltend eine oder mehrere Pufferverbindung(en), eine oder mehrere proteinartige Verbindung(en), eine oder mehrere hydrophile Verbindung (en), einen oder mehrere Komplexbildner/Anticoagulans (-coagulantien) und gegebenenfalls bakteriostatische Verbindungen, oder eine Mischung, enthaltend einen oder mehrere dieser Bestandteile.

15. Küvette nach Anspruch 14, wobei die lyophilisierte Abstandhalterschicht durch ein Lyophilisat abgedeckt ist, umfassend entweder

(A) eine Fluorophor enthaltende Verbindung oder eine Verbindung als ein Reaktionspartner R3 oder eine Mischung davon, unter der Voraussetzung, daß der Reaktionspartner R1 auf der Erregungsoberfläche (30) immobilisiert ist; oder
(B) Reaktionspartner R1 oder eine Fluorophor enthaltende Verbindung oder eine Verbindung als Reaktionspartner R3 oder eine Mischung davon, enthaltend zwei oder drei von diesen, unter der Voraussetzung, daß die Verankerungsverbindung auf der Erregungsoberfläche (30) immobilisiert ist,

wobei der Reaktionspartner R3 eine Affinität zu der Substanz besitzt, die als Reaktionspartner R2 zu untersuchen ist, wobei der Reaktionspartner R3 gegebenenfalls einen Fluorophor enthaltenden Rest umfaßt und die Fluorophor enthaltende Verbindung eine Affinität zu dem Reaktionspartner R2 oder zu dem Reaktionspartner R3 besitzt.

16. Verfahren zur Herstellung einer Küvette nach einem der Ansprüche 10 bis 15, umfassend den Schritt eines:

(a) Immobilisierens von Reaktionspartner R1 oder der Verankerungsverbindung auf der Erregungsoberfläche (30) der Küvette, die in einem der Ansprüche 1 bis 9 definiert ist.

**17.** Verfahren nach Anspruch 16, weiters umfassend die Schritte eines:

(b) Anwendens einer frierbaren Lösung I, enthaltend eine oder mehrere Pufferverbindung(en), eine oder mehrere proteinartige Verbindung(en), eine oder mehrere hydrophile Verbindung(en) oder eine oder mehrere Komplexbildner/Antikoagulanzien und gegebenenfalls bakteriostatische Verbindungen, oder eine Mischung, enthaltend einen oder mehrere dieser Bestandteile auf dem immobilisierten Reaktionspartner R1 oder der immobilisierten Verankerungsverbindung; und

(c) Frierens der Lösung I, um eine gefrorene Abstandhalterschicht zu erhalten.

**18.** Verfahren nach Anspruch 17, wobei nach Schritt (c) die gefrorene Lösung I lyophilisiert wird.

**19.** Verfahren nach Anspruch 17, weiters umfassend die Schritte eines:

(d) Aufbringens einer frierbaren Lösung II, enthaltend entweder (A) eine Fluorophor enthaltende Verbindung oder eine Verbindung als Reaktionspartner R3 oder eine Mischung davon, unter der Voraussetzung, daß der Reaktionspartner R1 auf der Erregungsoberfläche (30) immobilisiert ist, oder (B) Reaktionspartner R1 oder eine Fluorophor enthaltende Verbindung oder eine Verbindung als ein Reaktionspartner R3 oder eine Mischung davon, enthaltend zwei oder drei von diesen, unter der Voraussetzung, daß die Verankerungsverbindung auf der Erregungsoberfläche (30) auf der gefrorenen Abstandhalterschicht immobilisiert ist;

(e) Frierens der Lösung II, um eine gefrorene Lösung II auf der gefrorenen Lösung I zu erhalten; und

(f) Lyophilisierens des gefrorenen Inhalts in der Küvette, um ein Lyophilisat zu erhalten.

**20.** Verwendung der Küvette nach einem der Ansprüche 1 bis 15 in medizinischer oder veterinärmedizinischer Diagnose, Nahrungsmittelanalyse, Umwelt- bzw. Umgebungsanalyse, chemischer oder biologischer Analyse oder Analyse von Fermentationsverfahren bzw. -prozessen.

**21.** Verwendung der Küvette nach einem der Ansprüche 1 bis 15 für eine qualitative und/oder quantitative Bestimmung von Substanzen über immunologische Reaktionen.

**22.** Verwendung der Küvette nach einem der Ansprüche 10 bis 13 für die qualitative und/oder quantitative Bestimmung von Substanzen über immunologische Reaktionen, umfassend die Schritte eines:

Anordnens in Kontakt mit dem immobilisierten Reaktionspartner R1 oder mit der immobilisierten Verankerungsverbindung oder mit der lyophilisierten Abstandhalterschicht einer Lösung, welche die Substanz, die als Reaktionspartner R2 zu untersuchen ist, enthält und entweder (A) eine Fluorophor enthaltende Verbindung oder eine Verbindung als Reaktionspartner R3 oder eine Mischung davon, unter der Voraussetzung, daß der Reaktionspartner R1 auf der Erregungsoberfläche (30) immobilisiert ist, oder (B) Reaktionspartner R1 oder eine Fluorophor enthaltende Verbindung oder eine Verbindung als Reaktionspartner R3 oder eine Mischung davon, enthaltend zwei oder drei von diesen, unter der Voraussetzung, daß die Verankerungsverbindung auf der Erregungsoberfläche (30) immobilisiert ist, wobei sich ein Komplex auf dem immobilisierten Reaktionspartner R1 oder auf der immobilisierten Verankerungsverbindung ausbildet, wobei der Komplex entweder enthält:

(i) Reaktionspartner R1 und Reaktionspartner R2, welcher einen Fluorophor enthaltenden Rest oder eine Fluorophor enthaltende Verbindung umfaßt, die damit konjugiert ist; oder
(ii) Reaktionspartner R1, Reaktionspartner R2 und Reaktionspartner R3, welcher einen Fluorophor enthaltenden Rest oder eine Fluorophor enthaltende Verbindung umfaßt, die damit konjugiert ist; oder
(iii) Reaktionspartner R1, Reaktionspartner R2, Reaktionspartner R3 und die Fluorophor enthaltende Verbindung; oder
(iv) die Verankerungsverbindung, Reaktionspartner R1 und Reaktionspartner R2, welcher einen Fluorophor enthaltenden Rest oder eine Fluorophor enthaltende Verbindung, die damit konjugiert ist; oder
(v) die Verankerungsverbindung, Reaktionspartner R1, Reaktionspartner R2 und Reaktionspartner R3, welcher einen Fluorophor enthaltenden Rest oder eine Fluorophor enthaltende Verbindung umfaßt, die damit konjugiert ist; oder
(vi) die Verankerungsverbindung, Reaktionspartner R1, Reaktionspartner R2, Reaktionspartner R3 und die Fluorophor enthaltende Verbindung; und

- Erregens des Fluorophors, das an die Erregungsoberfläche (30) über den Komplex gebunden ist, durch das Evaneszenzfeld einer Lichtquelle und eines Messens der produzierten Fluoroeszenz.

23. Verwendung der Küvette nach Anspruch 15 für eine qualitative und/oder quantitative Bestimmung von Substanzen über immunologische Reaktionen, beinhaltend die Schritte eines:

- Anordnens in Kontakt mit dem lyophilisierten Inhalt in der Küvette einer Lösung, welche die Substanz, die zu untersuchen ist, als Reaktionspartner R2 enthält, wobei sich ein Komplex auf dem immobilisierten Reaktionspartner R1 oder auf der immobilisierten Antwortverbindung ausbildet, wobei der Komplex entweder enthält:

    (i) Reaktionspartner R1 und Reaktionspartner R2, welcher einen Fluorophor enthaltenden Rest oder eine Fluorophor enthaltende Verbindung umfaßt, die damit konjugiert ist; oder
    (ii) Reaktionspartner R1, Reaktionspartner R2 und Reaktionspartner R3, welcher einen Fluorophor enthaltenden Rest oder eine Fluorophor enthaltende Verbindung umfaßt, die damit konjugiert ist; oder
    (iii) Reaktionspartner R1, Reaktionspartner R2, Reaktionspartner R3 und die Fluorophor enthaltende Verbindung; oder
    (iv) die Verankerungsverbindung, Reaktionspartner R1 und Reaktionspartner R2, welcher einen Fluorophor enthaltenden Rest oder eine Fluorophor enthaltende Verbindung umfaßt, die damit konjugiert ist; oder
    (v) die Verankerungsverbindung, Reaktionspartner R1, Reaktionspartner R2 und Reaktionspartner R3, welcher einen Fluorophor enthaltenden Rest oder eine Fluorophor enthaltende Verbindung umfaßt, die damit konjugiert ist; oder
    (vi) die Verankerungsverbindung, Reaktionspartner R1, Reaktionspartner R2, Reaktionspartner R3 und die Fluorophor enthaltende Verbindung; und

- Erregens des Fluorophors, das an der Erregungsoberfläche (30) über den Komplex gebunden ist, durch das Evaneszenzfeld einer Lichtquelle und eines Messens der gebildeten Fluoroeszenz.

## Revendications

1. Cuvette (10) pour un dispositif de lecture pour tests en utilisant la technique du champ évanescent, comprenant :

- au moins une partie de puits (18) ayant au moins un puits (20) pour recevoir une solution contenant des substances à tester; et
- au moins une partie de base (24) supportant des éléments de paroi latéraux (22) de la partie de puits (18) et fournissant une surface d'excitation (30) du puits (20);

dans laquelle la partie de base (24) est formée d'un matériau optiquement transparent et a la forme en coupe transversale d'un trapézoïde isocèle dans un plan (B-B) coupant perpendiculairement la surface d'excitation (30) du puits (20), le trapézoïde ayant des premier et second côtés (26S, 28S) de longueur égale et des côtés de base et de sommet parallèles (32S, 30S);
dans laquelle la partie de base (24) comprend en outre :

- une surface de base (32) espacée de la surface d'excitation (30) et parallèle à celle-ci, la coupe transversale de la surface de base (32) dans ledit plan (B-B) étant le côté de base (32S) du trapézoïde;
- une première surface (26) pour recevoir un faisceau lumineux d'excitation (34) d'une source de lumière d'excitation externe, la coupe transversale de la première surface (26) dans ledit plan (B-B) étant le premier côté (26S) du trapézoïde; et
- une seconde surface (28) opposée à la première surface (26), la coupe transversale de la seconde surface (28) dans ledit plan (B-B) étant le second côté (28S) du trapézoïde; et

dans laquelle la partie de base (24) est à même de guider le faisceau lumineux d'excitation (24) au moins en partie le long d'un trajet optique rond d'un point d'incidence sur la première surface (26) par des réflexions sur la surface d'excitation (30), la seconde surface (28) et la surface de base (32) pour retourner au point d'incidence.

**2.** Cuvette (10) selon la revendication 1, dans laquelle la hauteur H du trapézoïde est donnée par l'expression :

$$H = -\frac{A\sin(\beta-\gamma)}{2(-\cos(\beta-\gamma)+\sin(\beta-\gamma)\tan(\gamma))}$$
$$-\left(-\frac{A}{2}+\frac{A\sin(\beta-\gamma)\tan(\gamma)}{2(-\cos(\beta-\gamma)+\sin(\beta-\gamma)\tan(\gamma))}\right)\tan(\beta+\gamma),$$

dans laquelle (90°-γ) est l'angle de base du trapézoïde entre le côté de base (32S) et le premier côté (26S), $n_2$ est l'indice de réfraction de la partie de base (24), A est la longueur du côté supérieur (30S) du trapézoïde et

$$\beta \approx \arcsin\left(\frac{\sin(\arctan(n_2))}{n_2}\right).$$

**3.** Cuvette (10) selon la revendication 1 ou 2, dans laquelle l'angle de réflexion du côté de base $\delta = 90° - (\beta + \gamma)$ est supérieur à $\arcsin(1/n_2)$, $n_2$ étant l'indice de réfraction de la partie de base (24) et

$$\beta \approx \arcsin\left(\frac{\sin(\arctan(n_2))}{n_2}\right).$$

**4.** Cuvette (10) selon l'une quelconque des revendications précédentes, dans laquelle l'angle de réflexion du côté d'excitation $\varepsilon = 90° - (\beta - \gamma)$ est supérieur à $\arcsin(1/n_2)$, $n_2$ étant l'indice de réfraction de la partie de base (24) et

$$\beta \approx \arcsin\left(\frac{\sin(\arctan(n_2))}{n_2}\right).$$

**5.** Cuvette (10) selon l'une quelconque des revendications précédentes, dans laquelle le trapézoïde est sensiblement un rectangle ayant une hauteur H et une largeur A et A/H ~ $n_2$.

**6.** Cuvette (10) selon l'une quelconque des revendications précédentes, dans laquelle la partie de puits (18) et la partie de base (24) sont formées de façon unitaire d'un matériau à base de résine, comprenant de préférence les suivants : PMMA, polystyrène, polycarbonate, SAN, cyclocopolyméroléfine ou polyoléfine.

**7.** Cuvette (10) selon l'une quelconque des revendications précédentes, dans laquelle la cuvette (10) comprend une pluralité de puits (20).

**8.** Cuvette selon l'une quelconque des revendications 1 à 7, dans laquelle la surface d'excitation (30) est hydrophile.

**9.** Cuvette selon l'une quelconque des revendications 1 à 7, dans laquelle la surface d'excitation (30) est au moins en partie revêtue d'un composé hydrophile.

**10.** Cuvette selon l'une quelconque des revendications 1 à 9, dans laquelle un composé comme partenaire réactionnel R1 est immobilisé sur la surface d'excitation facultativement revêtue (30), ledit partenaire réactionnel R1 ayant une affinité avec la substance déterminée comme partenaire réactionnel R2.

**11.** Cuvette selon la revendication 10, dans laquelle ledit partenaire réactionnel R2 comprend un radical contenant un fluorophore.

**12.** Cuvette selon l'une quelconque des revendications 1 à 9, dans laquelle un composé d'ancrage pour un composé comme partenaire réactionnel R1 est immobilisé sur la surface d'excitation facultativement revêtue (30), ledit partenaire réactionnel R1 ayant une affinité avec la substance déterminée comme partenaire réactionnel R2.

**13.** Cuvette selon l'une quelconque des revendications 10 à 12, dans laquelle ledit partenaire réactionnel R1 ou ledit composé d'ancrage est présent sous forme lyophilisée.

**14.** Cuvette selon la revendication 13, dans laquelle ledit partenaire réactionnel lyophilisé R1 ou ledit composé d'ancrage lyophilisé est recouvert d'une couche d'espacement lyophilisée contenant un ou plusieurs composés tampons, un ou plusieurs composés protéiques, un ou plusieurs composés hydrophiles ou un ou plusieurs agents complexants/anticoagulants et facultativement des composés bactériostatiques, ou un mélange contenant un ou plusieurs de ces constituants.

**15.** Cuvette selon la revendication 14, dans laquelle ladite couche d'espacement lyophilisée est recouverte d'un lyophilisat comprenant

(A) un composé contenant un fluorophore ou un composé comme partenaire réactionnel R3 ou un de leurs mélanges, à condition que le partenaire réactionnel R1 soit immobilisé sur la surface d'excitation (30); ou
(B) un partenaire réactionnel R1 ou un composé contenant un fluorophore ou un composé comme partenaire réactionnel R3 ou un de leurs mélanges contenant deux ou trois d'entre eux, à condition que ledit composé d'ancrage soit immobilisé sur la surface d'excitation (30);

ledit partenaire réactionnel R3 ayant une affinité avec la substance déterminée comme partenaire réactionnel R2, dans laquelle ledit partenaire réactionnel R3 comprend facultativement un radical contenant un fluorophore, et ledit composé contenant un fluorophore ayant une affinité avec le partenaire réactionnel R2 ou le partenaire réactionnel R3.

**16.** Procédé pour la préparation d'une cuvette selon l'une quelconque des revendications 10 à 15, comprenant l'étape suivante :

(a) on immobilise le partenaire réactionnel R1 ou ledit composé d'ancrage sur la surface d'excitation (30) de la cuvette définie dans l'une quelconque des revendications 1 à 9.

**17.** Procédé selon la revendication 16, comprenant en outre les étapes suivantes :

(b) on applique une solution congelable I contenant un ou plusieurs composés tampons, un ou plusieurs composés protéiques, un ou plusieurs composés hydrophiles ou un ou plusieurs agents complexants/anticoagulants et facultativement des composés bactériostatiques, ou un mélange contenant un ou plusieurs de ces constituants sur ledit partenaire réactionnel immobilisé R1 ou ledit composé d'ancrage immobilisé; et
(c) on congèle ladite solution I pour obtenir une couche d'espacement congelée.

**18.** Procédé selon la revendication 17, dans lequel, après l'étape (c), la solution congelée I est lyophilisée.

**19.** Procédé selon la revendication 17, comprenant en outre les étapes suivantes :

(b) on applique une solution congelable II contenant (A) un composé contenant un fluorophore ou un composé comme partenaire réactionnel R3 ou un de leurs mélanges, à condition que le partenaire réactionnel R1 soit immobilisé sur la surface d'excitation (30), ou (B) le partenaire réactionnel R1 ou un composé contenant un fluorophore ou un composé comme partenaire réactionnel R3 ou un de leurs mélanges contenant deux ou trois d'entre eux, à condition que ledit composé d'ancrage soit immobilisé sur la surface d'excitation (30), sur ladite couche d'espacement congelée; et
(e) on gèle ladite solution II pour obtenir une solution congelée II sur la solution congelée I; et
(f) on lyophilise le contenu congelé dans la cuvette pour obtenir un lyophilisat.

**20.** Utilisation de la cuvette selon l'une quelconque des revendications 1 à 15 dans des diagnostics de médecine ou de médecine vétérinaire, en analyse d'aliments, en analyse environnementale, en analyse chimique ou biologique ou en analyse de procédés de fermentation.

**21.** Utilisation de la cuvette selon l'une quelconque des revendications 1 à 15 pour une détermination qualitative et/ou quantitative de substances par réactions immunologiques.

**22.** Utilisation de la cuvette selon l'une quelconque des revendications 10 à 13 pour une détermination qualitative et/ou quantitative de substances par réactions immunologiques, comprenant les étapes suivantes :

- On place, en contact avec le partenaire réactionnel immobilisé R1 ou avec le composé d'ancrage immobilisé ou avec la couche d'espacement lyophilisée, une solution qui contient la substance testée comme partenaire réactionnel R2 et (A) un composé contenant un fluorophore ou un composé comme partenaire réactionnel R3 ou un de leurs mélanges, à condition que le partenaire réactionnel R1 soit immobilisé sur la surface d'excitation (30), ou (B) le partenaire réactionnel R1 ou un composé contenant un fluorophore ou un composé comme partenaire réactionnel R3 ou un de leurs mélanges contenant deux ou trois d'entre eux, à condition que ledit composé d'ancrage soit immobilisé sur la surface d'excitation (30), dans lequel un complexe se forme sur le partenaire réactionnel immobilisé R1 ou sur le composé d'ancrage immobilisé, ledit complexe contenant

(i) le partenaire réactionnel R1 et le partenaire réactionnel R2 qui comprend un radical contenant un fluorophore ou un composé contenant un fluorophore qui lui est conjugué; ou
(ii) le partenaire réactionnel R1, le partenaire réactionnel R2 et le partenaire réactionnel R3 qui comprend un radical contenant un fluorophore ou un composé contenant un fluorophore qui lui est conjugué; ou
(iii) le partenaire réactionnel R1, le partenaire réactionnel R2, le partenaire réactionnel R3 et le composé contenant un fluorophore; ou
(iv) le composé d'ancrage, le partenaire réactionnel R1 et le partenaire réactionnel R2, qui comprend un radical contenant un fluorophore ou un composé contenant un fluorophore qui lui est conjugué; ou
(v) le composé d'ancrage, le partenaire réactionnel R1, le partenaire réactionnel R2 et le partenaire réactionnel R3 qui comprend un radical contenant un fluorophore ou un composé contenant un fluorophore qui lui est conjugué; ou
(vi) le composé d'ancrage, le partenaire réactionnel R1, le partenaire réactionnel R2, le partenaire réactionnel R3 et le composé contenant un fluorophore; et

- on excite le fluorophore lié à la surface d'excitation (30) via ledit complexe par le champ évanescent d'une source de lumière et en mesurant la fluorescence produite.

23. Utilisation de la cuvette selon la revendication 15 pour une détermination qualitative et/ou quantitative de substances par des réactions immunologiques, comprenant les étapes suivantes :

- on place, en contact avec le contenu lyophilisé de la cuvette, une solution qui contient la substance testée comme partenaire réactionnel R2, dans laquelle un complexe se forme sur le partenaire réactionnel immobilisé R1 ou sur le composé de réponse immobilisé, ledit complexe contenant

(i) le partenaire réactionnel R1 et le partenaire réactionnel R2 qui comprend un radical contenant un fluorophore ou un composé contenant un fluorophore qui lui est conjugué; ou
(ii) le partenaire réactionnel R1, le partenaire réactionnel R2 et le partenaire réactionnel R3 qui comprend un radical contenant un fluorophore ou un composé contenant un fluorophore qui lui est conjugué; ou
(iii) le partenaire réactionnel R1, le partenaire réactionnel R2, le partenaire réactionnel R3 et le composé contenant un fluorophore; ou
(iv) le composé d'ancrage, le partenaire réactionnel R1 et le partenaire réactionnel R2 qui comprend un radical contenant un fluorophore ou un composé contenant un fluorophore qui lui est conjugué; ou
(v) le composé d'ancrage, le partenaire réactionnel R1, le partenaire réactionnel R2 et le partenaire réactionnel R3 qui comprend un radical contenant un fluorophore ou un composé contenant un fluorophore qui lui est conjugué; ou
(vi) le composé d'ancrage, le partenaire réactionnel R1, le partenaire réactionnel R2, le partenaire réactionnel R3 et le composé contenant un fluorophore; et

- on excite le fluorophore lié à la surface d'excitation (30) via ledit complexe par le champ évanescent d'une source de lumière et en mesurant la fluorescence produite.

Fig. 1

(a) (b) (d) (e) (f)

B-B A-A C-C

EP 1 371 967 B1

Fig. 2

**Fig. 3**

**Fig. 4**

Kinetic of Biotin-HRP Binding to Streptavidin Surface

OD 630nm [unit]

time [min]

**Fig. 5(A)**

**Fig. 5(B)**

Fig. 6